# EUROPÄISCHE PATENTSCHRIFT

(11) **EP 2 513 251 B1**
(45) Veröffentlichungstag und Bekanntmachung des Hinweises auf die Patenterteilung: **13.05.2015**
(21) Anmeldenummer: 10790979.8
(22) Anmeldetag: 15.12.2010
(51) Int. Cl.: C09K 21/12, C08J 9/00, C08K 5/53

(54) **FLAMMSCHUTZMITTEL**
FLAME RETARDANT
AGENT IGNIFUGE

(30) Priorität: 16.12.2009 EP 09179445
(43) Veröffentlichungstag der Anmeldung: 24.10.2012
(73) Patentinhaber: BASF SE, 67056 Ludwigshafen (DE)
(72) Erfinder: FLECKENSTEIN, Christoph, 63579 Freigericht (DE); DENECKE, Hartmut, 67071 Ludwigshafen (DE); BELLIN, Ingo, 68159 Mannheim (DE); KRIHA, Olaf, 67433 Neustadt (DE); SPIES, Patrick, 67059 Ludwigshafen (DE); FUCHS, Sabine, 68167 Mannheim (DE); MASSONNE, Klemens, 67098 Bad Dürkheim (DE); HAHN, Klaus, 67281 Kirchheim (DE); DEGLMANN, Peter, 68163 Mannheim (DE); HOFMANN, Maximilian, 68167 Mannheim (DE); KINDLER, Alois, 67269 Grünstadt (DE)
(74) Vertreter: Rippel, Hans Christoph
(86) Internationale Anmeldenummer: PCT/EP2010/069796
(87) Internationale Veröffentlichungsnummer: WO 2011/083009

(56) Entgegenhaltungen:
- WO-A1-96/17853
- DE-A1- 19 741 777
- US-A1- 2006 229 372
- GRACHEV M K ANFILOV K L BEKKER A R ET AL: "Phosphorylation of 1,4:3,6-dianhydro-D-Mannitol", JOURNAL OF GENERAL CHEMISTRY USSR, CONSULTANTS BUREAU, NEW YORK, NY, US, Bd. 65, Nr. 12 Part 1, 1. Dezember 1995 (1995-12-01), Seiten 1785-1789, XP008135304, ISSN: 0022-1279 in der Anmeldung erwähnt
- M. M. DEMAINE, S. J. BENKOVIC: "Kinetic hysteresis for fructose bisphosphatase: A change in substrate configuration specificity", BIOCHEMICAL AND BIOPHYSICAL RESEARCH COMMUNICATIONS, Bd. 88, Nr. 3, 3. Juni 1979 (1979-06-03), Seiten 835-840, XP002631998, in der Anmeldung erwähnt
- MANFRED T. REETZ, TORSTEN NEUGEBAUER: "New Diphosphite Ligands for Catalytic Asymmetric Hydrogenation: The Crucial Role of Conformationally Enantiomeric Diols", ANGEWANDTE CHEMIE INTERNATIONAL EDITION, Bd. 38, Nr. 1-2, 15. Januar 1999 (1999-01-15), Seiten 179-181, XP002631999, in der Anmeldung erwähnt
- ELISABETH HAUPTMAN, RAFAEL SHAPIRO, WILLIAM MARSHALL: "Synthesis of Chiral Bis(phosphinite) Ligands with a Tetrahydrothiophene Backbone: Use in Asymmetric Hydrogenation", ORGANOMETALLICS, Bd. 17, 26. Juni 1998 (1998-06-26), Seiten 4976-4982, XP002632000, in der Anmeldung erwähnt

## Beschreibung

Die Erfindung betrifft die Verwendung von Phosphorverbindungen als Flammschutzmittel sowie Polymere, insbesondere Schaumstoffe, welche diese Flammschutzmittel enthalten, ein Verfahren zur Herstellung von flammgeschützten Polymeren, insbesondere Schaumstoffen, sowie neuartige Phosphorverbindungen.

Derzeit werden als Flammschutzmittel in Kunststoffen hauptsächlich polyhalogenierte Kohlenwasserstoffe, gegebenenfalls in Kombination mit geeigneten Synergisten, beispielsweise organischen Peroxiden oder stickstoffhaltigen Verbindungen eingesetzt. Ein typischer Vertreter dieser klassischen Flammschutzmittel ist Hexabromcyclododecan (HBCD), welches beispielsweise in Polystyrol Anwendung findet. Aufgrund von Bioakkumulation sowie Persistenz von einigen polyhalogenierten Kohlenwasserstoffen ist es ein großes Bestreben in der Kunststoffindustrie, halogenierte Flammschutzmittel zu substituieren.

Flammschutzmittel sollten nach Möglichkeit neben einer hohen Flammschutzwirkung im Kunststoff bei niedriger Beladung für die Verarbeitung auch ausreichende Temperatur- und Hydrolysestabilität aufweisen. Des Weiteren sollten sie keine Bioakkumulation sowie Persistenz aufweisen.

In der WO-A 2009/035881 und der WO-A 2008/088487 sind halogenfreie Flammschutzmittel mit Schwefel-Phosphor-Bindungen, insbesondere Thiophosphate und Thiophosphonate beschrieben. WO-A 96/17853 offenbart organische Bisphosphate als Flammschutzmittel, wobei die organische Brückengruppe eine aromatische oder alkylenische Gruppe ist. Dennoch bleibt ein breiter Raum für Verbesserungen solcher Flammschutzmittel, beispielsweise weil halogenfreie Flammschutzmittel zur Erreichung der gleichen Flammschutzwirkung von halogenhaltigen Flammschutzmitteln in der Regel in deutlich höheren Mengen eingesetzt werden müssen. Deshalb können halogenhaltige Flammschutzmittel, die bei thermoplastischen Polymeren, wie Polystyrol, einsetzbar sind, häufig auch nicht bei Polymerschaumstoffen eingesetzt werden, da sie entweder den Schäumprozess stören oder die mechanischen und thermischen Eigenschaften des Polymerschaumstoffes beeinflussen. Bei der Herstellung von expandierbarem Polystyrol durch Suspensionspolymerisation können außerdem die hohen Flammschutzmittelmengen die Stabilität der Suspension verringern. Zudem ist die Wirkung der bei thermoplastischen Polymeren eingesetzten Flammschutzmittel bei Polymerschaumstoffen häufig aufgrund des unterschiedlichen Brandverhaltens und unterschiedlicher Brandtests nicht vorhersagbar.

Aufgabe der Erfindung ist es daher, Verbindungen bereit zu stellen, die zum einen halogenfrei sind und zum anderen schon in geringen Mengen gute Flammschutzeigenschaften in Polymeren, insbesondere in Polymerschaumstoffen, aufweisen.

Es wurde gefunden, dass sich bestimmte Phosphorverbindungen der Formel (I) in besonderer Weise zur Verwendung als Flammschutzmittel eignen.

Zwar sind einzelne Verbindungen der Formel (I) bereits aus den folgenden Literaturstellen bekannt, eine Eignung als Brandschutzmittel lässt sich aus diesen Dokumenten jedoch nicht ableiten: DeMaine, M. M.; Benkovic, S. J., Biochemical and Biophysical Research Communications (1979), 88(3), 835-40 (D1); Grachev, M. K.; Anfilov, K. L.; Bekker, A. K.; Nifant'ev. E. E., Zhurnal Obshchei Khimii (1995), 65(12), 1946-50 (D2), (D6), (D7), (D20); Petrov, K. A.; Nifant'ev, E. E.; Shcheglov, A. A.; Khudyntsev, N. A. Zhurnal Obshchei Khimii (1962), 32 3074-80 (D3), (D4), (D5), (D22); Chen, Min-dong; Yuan, Jian-chao; Zhang, Yu-hua; Lu, Shi-jie; Sun, Wei; Wang, Lai-lai., Fenzi Cuihua (2001), 15(5), 385-387 (D8), (D9); Kurochkina, G. I.; Grachev, M. K.; Vasyanina, L. K.; Piskaev, A. E.; Nifant'ev, E. F., Doklady Akademii Nauk (2000), 371(2), 189-193 (D10), (D25), US 5,569,015 (D11), (D26); Reetz, Manfred T.; Neugebauer, Torsten, Angew. Chem., Int. Ed. (1999), 38(1/2), 179-181 (D12), (D13), (D15), (D16), (D17); Dieguez, Montserrat; Pamies, Oscar; Claver, Carmen., Journal of Organic Chemistry (2005), 70(9), 3363-3368 (D14), DE-A 197 41 777 (D18), (D19), (D21 Nifant'ev, E. E.; Tuseev, A. P.; Koshurin, Yu. I., Otd. Obshch. i Tekhn. Khim. (1965), 38-41 (D23); Nifant'ev, E. E.; Markov, S. M.; Tuseev, A. P.; Vasil'ev, A. F. Otd. Obshch. i Tekhn. Khim. (1965), 42-5 (D24); Hauptman, Elisabeth; Shapiro, Rafael; Marshall, William, Organometallics (1998), 17(23), 4976-4982, (D27), (D28), (D29), (D30).

Gegenstand der Erfindung ist daher die Verwendung von Phosphorverbindungen der Formel (I) als Flammschutzmittel, 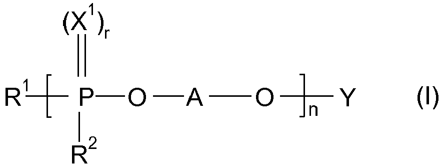 wobei die Symbole in der Formel (I) folgende Bedeutungen haben:
- A: ist eine Gruppe 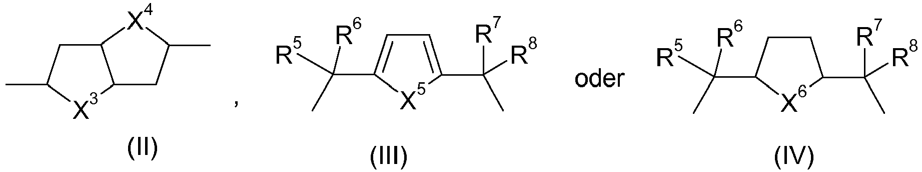
- Y: ist -P(=X²)ₛR³R⁴, H, eine geradkettige oder verzweigte C₁-C₁₂-Alkylgruppe, C₅-C₆-Cycloalkyl, C₆-C₁₂-Aryl, Benzyl, wobei die vier letztgenannten Gruppen unsubstituiert oder durch einen oder mehrere Reste C₁-C₄-Alkyl oder C₂-C₄-Alkenyl substituiert sind;
- R¹, R², R³ und R⁴: sind gleich oder verschieden Wasserstoff, OH, C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR⁹ COR¹⁰, COOR¹¹, CONR¹²R¹³ oder zwei Reste R¹, R², R³, R⁴ bilden zusammen mit dem Phosphoratom, an das sie gebunden sind, oder der Gruppe P-O-A-O-P ein Ringsystem;
- R⁵, R⁶, R⁷, R⁸: sind gleich oder verschieden H, C₁-C₁₆-Alkyl, C₂-C₁₆-Alkenyl, C₁-C₁₆-Alkoxy, C₂-C₁₆-Alkenoxy;
- R⁹, R¹⁰, R¹¹, R¹², R¹³: sind gleich oder verschieden H C₁-C₁₆-Alkyl, C₂-C₁₆-Alkenyl, C₆-C₁₀-Aryl, C₆-C₁₀-Aryl-C₁-C₁₆-Alkyl, , C₆-C₁₀-Aryl-C₁-C₁₆-Alkoxy;
- X¹, X²: sind gleich oder verschieden S oder O;
- r, s: sind gleich oder verschieden, vorzugsweise gleich, 0 oder 1;
- X³, X⁴, X⁵, X⁶: sind gleich oder verschieden S oder O und
- n: ist eine natürliche Zahl von 1 bis 50.

Gegenstand der Erfindung sind auch Phosphorverbindungen der Formel (I), wobei in den Bedeutungen der Symbole in der Formel (I) X4 für S steht und wobei folgende Verbindungen ausgenommen sind:

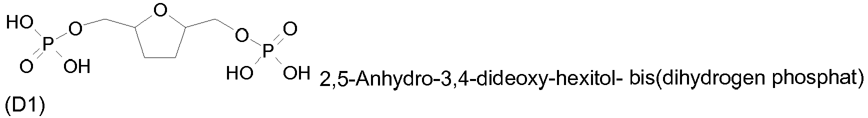

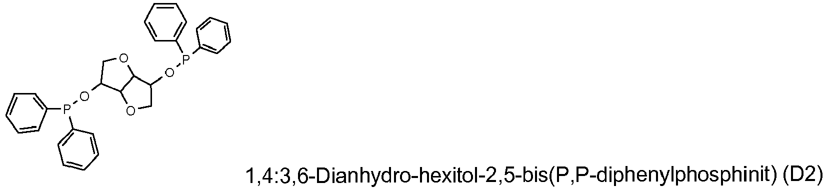

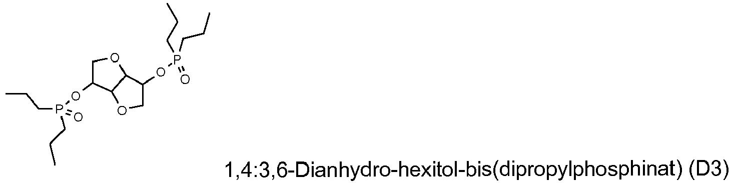

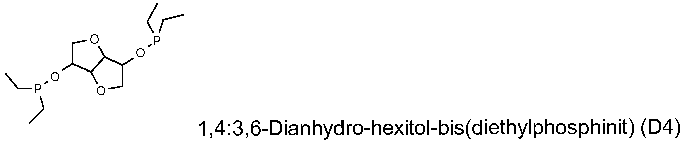

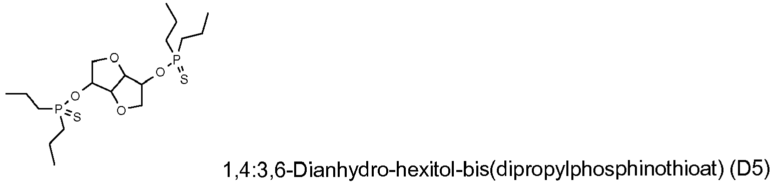

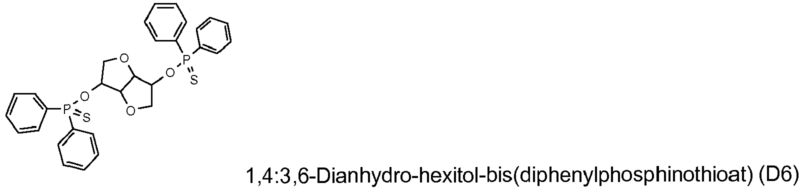

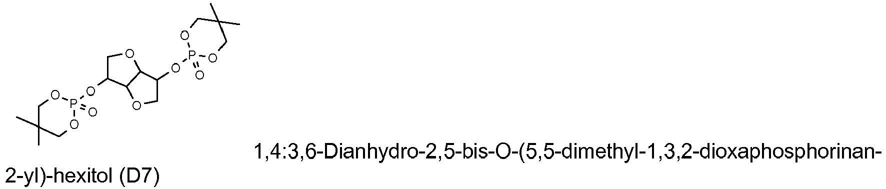

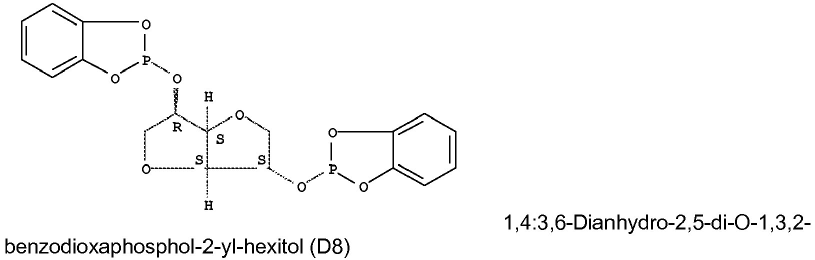

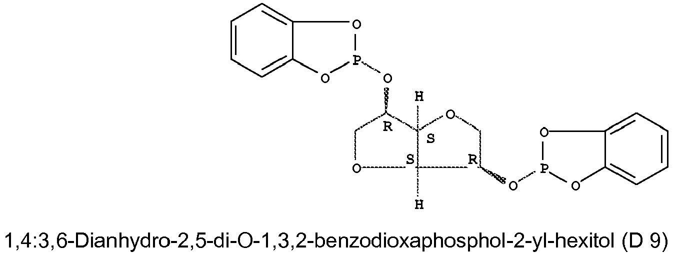

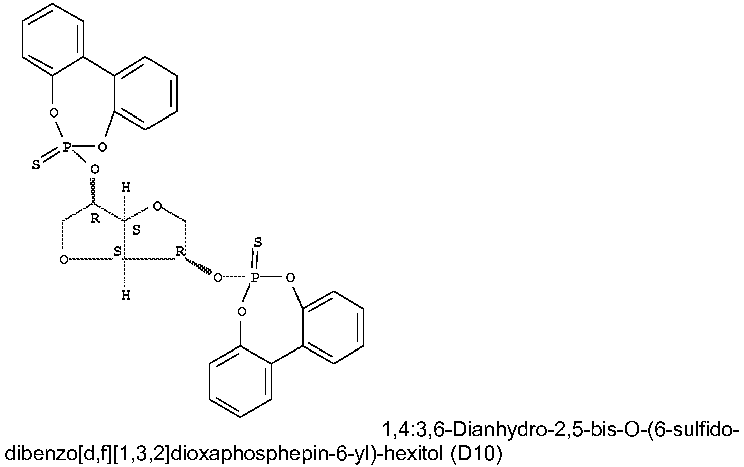

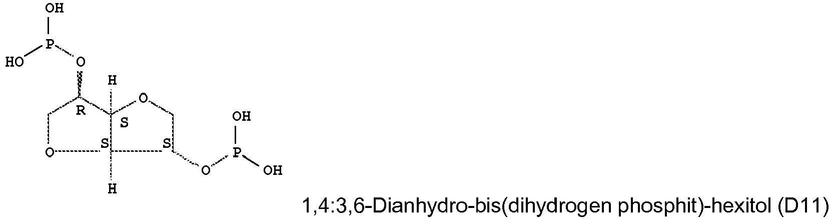

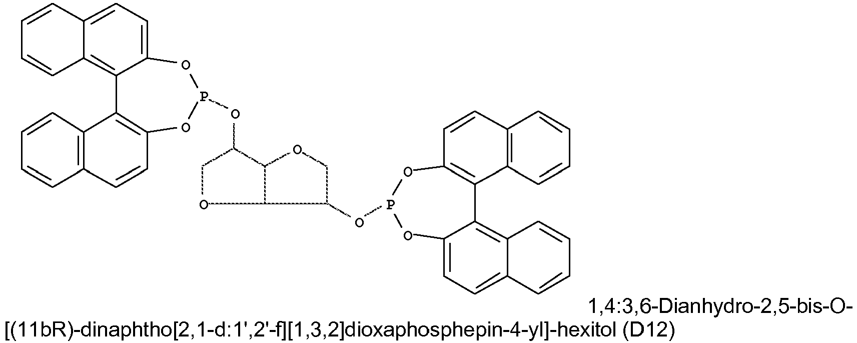

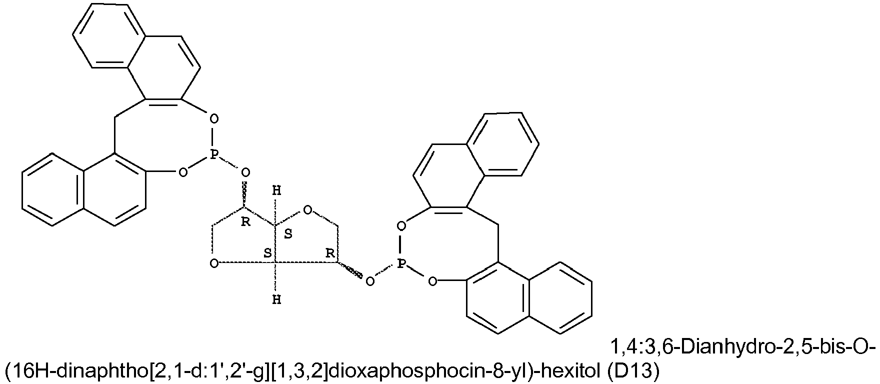

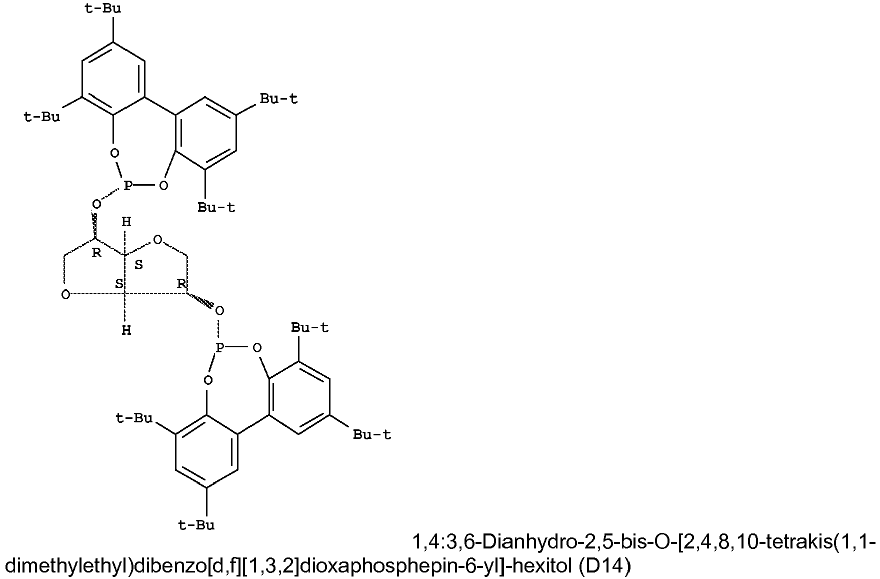

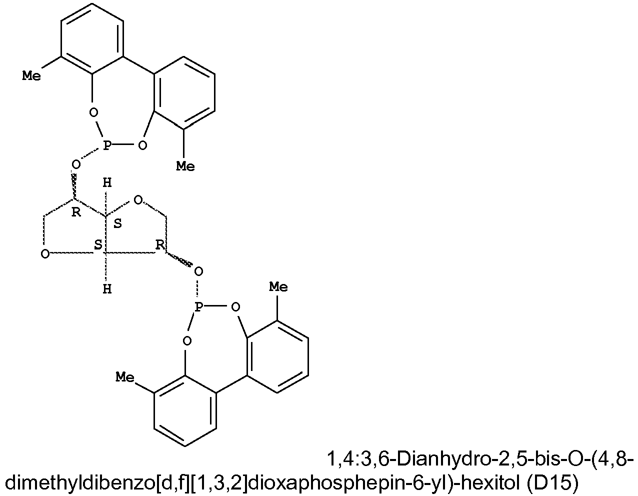

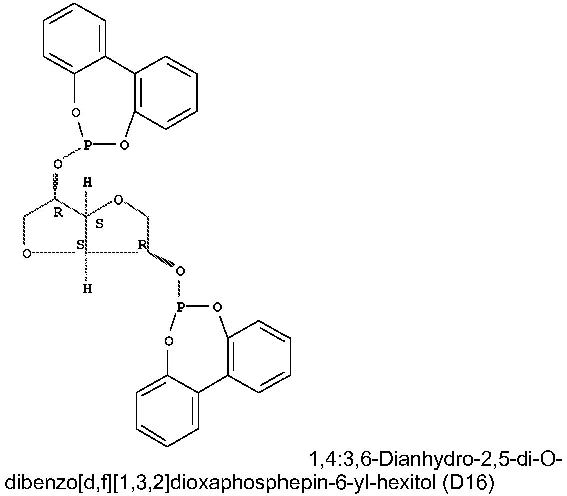

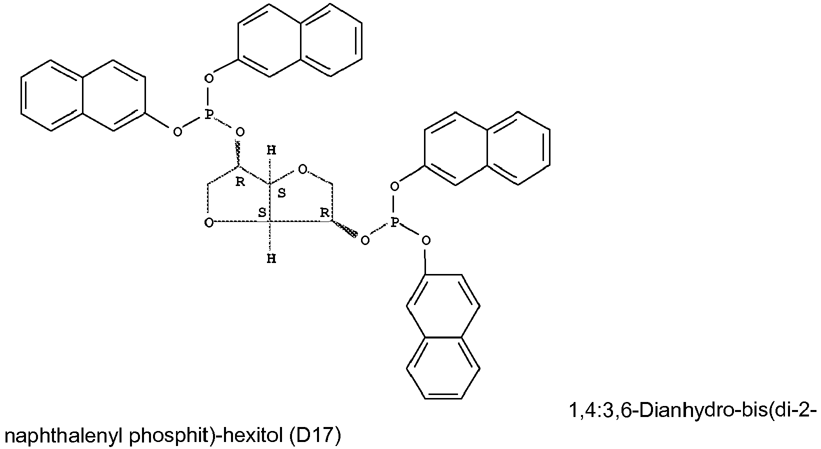

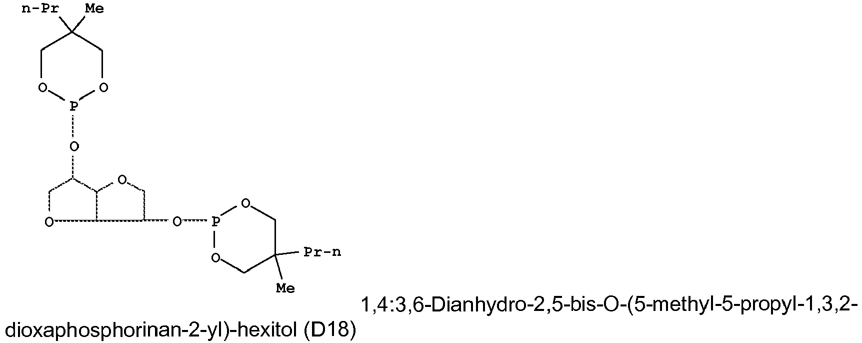

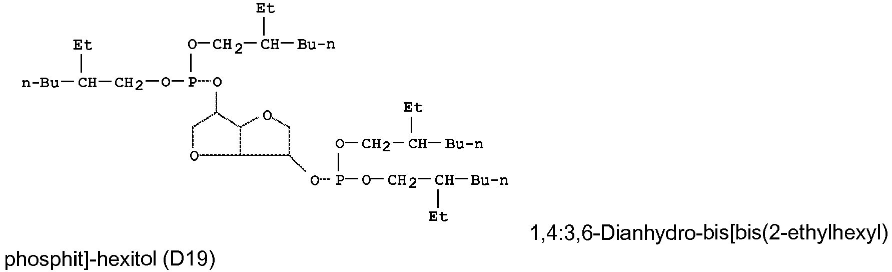

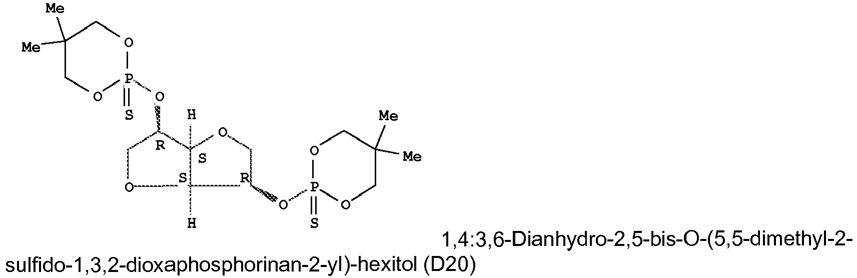

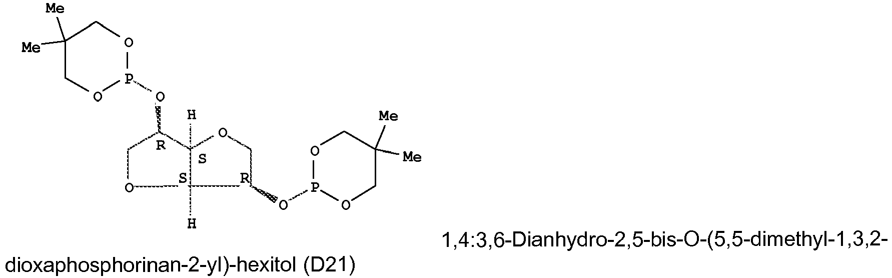

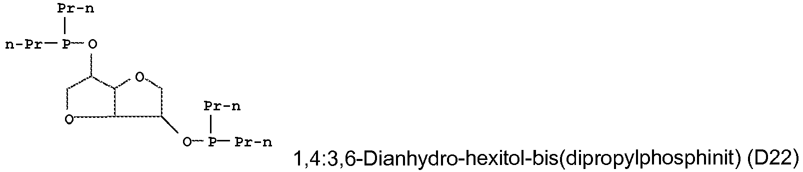

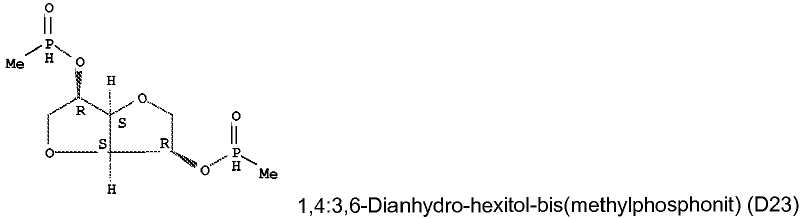

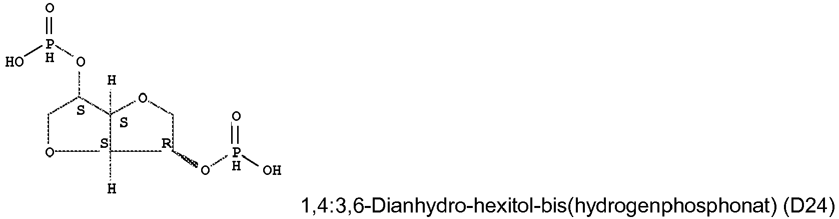

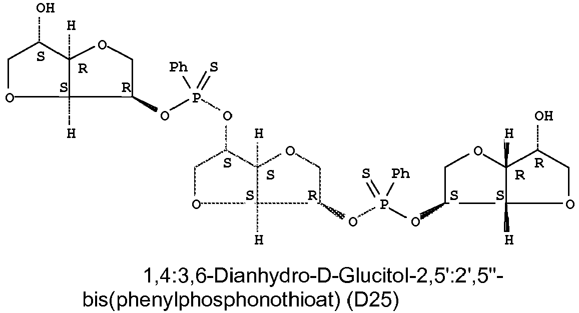

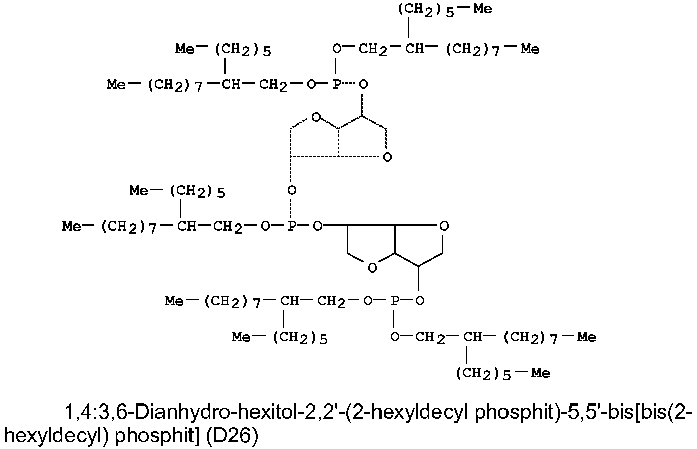

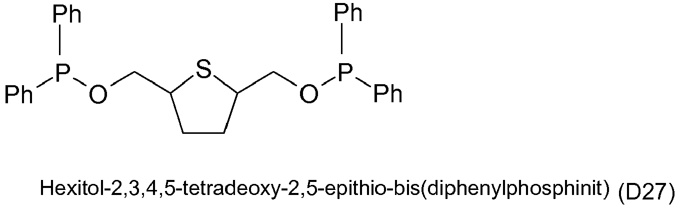

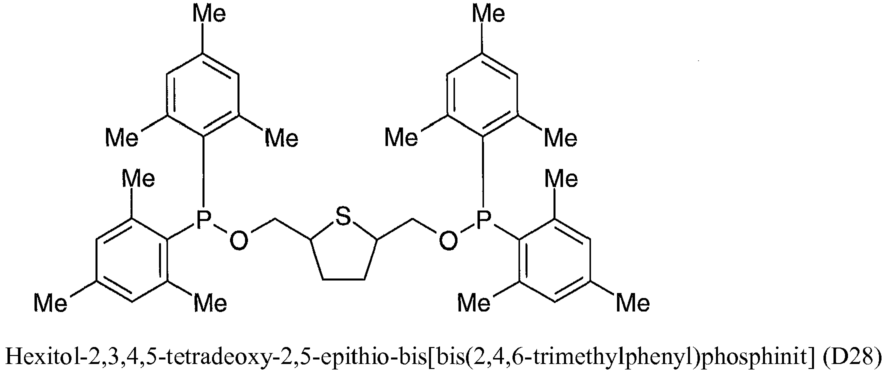

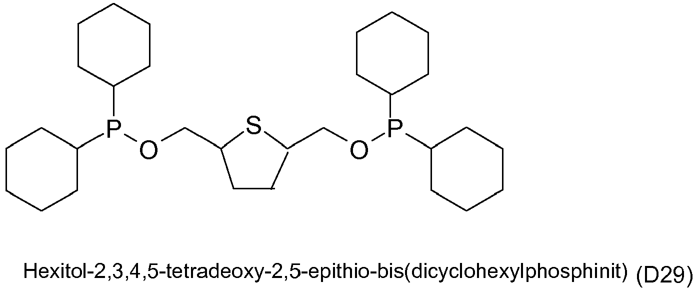

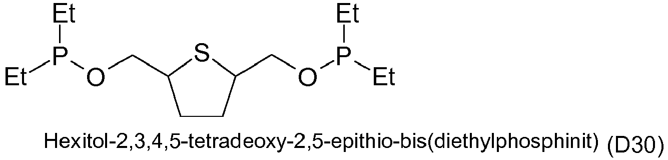

Weiterhin Gegenstand der Erfindung ist ein Verfahren zur flammhemmenden Ausrüstung eines Materials, wobei man dem Material ein Flammschutzmittel, enthaltend eine oder mehrere Verbindungen der Formel (I) zusetzt.

Ebenfalls Gegenstand der Erfindung ist eine Polymerzusammensetzung in Form eines expandierbaren Styrolpolymers (EPS) oder eines Styrolextrusionsschaumstoffes (XPS), enthaltend eine oder mehrere Verbindungen der Formel (I), vorzugsweise ein expandierbares Styrolpolymer erhältlich durch ein Extrusionsverfahren oder ein Suspensionsverfahren. Gegenstand der Erfindung ist daher auch ein Verfahren zur Herstellung eines flammgeschützten, expandierbaren Styrolpolymers (EPS), beispielhaft umfassend die Schritte:
a) Einmischen eines organischen Treibmittels und einer oder mehrerer Verbindungen der Formel (I) sowie gegebenenfalls weiterer Hilfs-und Zusatzstoffein eine Styrolpolymerschmelze mittels statischer und/oder dynamischer Mischer bei einer Temperatur von mindestens 150°C,
b) Kühlen der treibmittelhaltigen Styrolpolymerschmelze auf eine Temperatur von mindestens 120°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Ebenso bevorzugt ist ein Verfahren zur Herstellung eines erfindungsgemäßen expandierbaren Styropolpolymers, umfassend die Schritte:
a) Polymerisation einer oder mehrerer Styrolmonomere in Suspension;
b) Zugabe einer oder mehrerer Verbindungen der Formel (I) sowie gegebenenfalls weiterer Hilfs-und Zusatzstoffe vor, während und/oder nach der Polymerisation;
c) Zugabe eines organischen Treibmittels vor, während und/oder nach der Polymerisation und
d) Abtrennen der expadierbaren, eine oder mehrere Verbindungen der Formel (I) enthaltenden Styrolpolymerteilchen von der Suspension.

Weiterhin Gegenstand der Erfindung ist sowie ein Verfahren zur Herstellung eines Styrolextrusionsschaumstoffes (XPS) umfassend die Schritte:
a) Erhitzen einer Polymerkomponente P, die mindestens ein Polystyrolpolymer enthält, zur Ausbildung einer Polymerschmelze,
b) Einbringen einer Treibmittelkomponente T in die Polymerschmelze zur Ausbildung einer schäumbaren Schmelze,
c) Extrusion der schäumbaren Schmelze in einen Bereich niedrigeren Drucks unter Aufschäumen zu einem Extrusionsschaum und
d) Zugabe von mindestens einer Verbindung der Formel (I) als Flammschutzmittel sowie gegebenenfalls weiterer Hilfs- und Zusatzstoffen in mindestens einem der Schritte a) und b).

Die Verbindungen der Formel (I) sind halogenfrei und weisen auch in geringen Mengen eine deutlich bessere Wirksamkeit als Flammschutzmittel, insbesondere in Schaumstoffen, auf, als die aus dem Stand der Technik bekannten Flammschutzmittel, wie Disflamoll TP^{®} (Triphenylphosphat (O)P(OPh)₃) oder Dibenz[c,e][1,2]-oxaphosphorin-6-oxid (DOPO, EP-A 1 791 896).

Bevorzugt haben die Symbole in der Formel (I) folgende Bedeutungen:
A ist bevorzugt eine Gruppe der Formel (II), (III) oder (IV).
Y ist bevorzugt (X²)ᵣPR³R⁴ oder H.
R¹, R², R³, R⁴ sind bevorzugt gleich oder verschieden C₆-C₁₀-Aryl, C₆-C₁₀-Aryloxy, C₆-C₁₀-Aryl-C₁-C₁₆-Alkyl oder C₆-C₁₀-Aryl-C₁-C₁₆-Alkoxy.
R⁵, R⁶, R⁷, R⁸ sind bevorzugt H, C₁-C₁₆-Alkyl, C₂-C₁₆-Alkenyl, C₁-C₁₆-Alkoxy oder C₂-C₁₆-Alkenoxy. Sie sind gleich oder verschieden, bevorzugt gleich.
X¹, X² sind bevorzugt gleich oder verschieden S oder O.
r, s sind bevorzugt gleich 0 oder 1.
X³, X⁴, X⁵, X⁶ sind bevorzugt O.
n ist bevorzugt eine natürliche Zahl von 1 bis 30.

Bevorzugt sind Verbindungen der Formel (I), in denen alle Symbole die bevorzugten Bedeutungen haben.

Besonders bevorzugt haben die Symbole in der Formel (I) folgende Bedeutungen:
A ist besonders bevorzugt eine Gruppe der Formel (II), (III) oder (IV).
Y ist besonders bevorzugt (X²)ᵣPR³R⁴.
R¹, R², R³, R⁴ sind besonders bevorzugt gleich oder verschieden Phenyl, Phenoxy, Phenyl-C₁-C₁₆-Alkyl, Phenyl-C₁-C₁₆-Alkoxy.
R⁵, R⁶, R⁷ , R⁸ sind besonders bevorzugt H.
X¹, X² sind besonders bevorzugt gleich oder verschieden S oder O.
r, s sind besonders bevorzugt gleich 0 oder 1.
X³, X⁴, X⁵, X⁶ sind besonders bevorzugt O.
n ist besonders bevorzugt 1.

Besonders bevorzugt sind Verbindungen der Formel (I), in denen alle Symbole und Indizes die besonders bevorzugten Bedeutungen haben.

Bevorzugt sind Verbindungen der Formel (I), in denen R¹ und R² gleich sind.

Weiterhin bevorzugt sind Verbindungen der Formel (I), in denen R¹ und R³ oder R¹ und R⁴ gleich sind. Weiter besonders bevorzugt sind Verbindungen der Formel (I), in denen R² und R³ oder R² und R⁴ gleich sind.

Weiter bevorzugt sind Verbindungen, in denen R¹, R², R³ und R⁴ gleich sind.

Insbesondere bevorzugt haben die Symbole und Indizes in der Formel (I) folgende Bedeutungen:
A ist insbesondere bevorzugt eine Gruppe der Formel (II), (III) oder (IV).
Y ist insbesondere bevorzugt (X²)ᵣPR³R⁴.
R¹, R², R³, R⁴ sind insbesondere bevorzugt gleich Phenyl oder Phenoxy.
R⁵, R⁶, R⁷, R⁸ sind insbesondere bevorzugt H.
X¹, X² sind insbesondere bevorzugt gleich S oder O.
r, s sind insbesondere bevorzugt gleich 0 oder 1.
X³, X⁴, X⁵, X⁶ sind insbesondere bevorzugt Sauerstoff.
n ist insbesondere bevorzugt 1.

Insbesondere bevorzugt sind Verbindungen der Formel (I), in denen alle Symbole und Indizes die insbesondere bevorzugten Bedeutungen haben.

Bevorzugt sind Verbindungen der Formel (I), in denen jeweils zwei der Reste R¹, R², R³, R⁴ zusammen mit dem Phosphoratom, an das sie gebunden sind, oder der Gruppe P-O-A-O-P- ein drei- bis zwölfgliedriges Ringsystem bilden.

Bevorzugt sind weiterhin Verbindungen der Formel (I), in denen zwei Reste R¹, R², R³, R⁴ zusammen kein Ringsystem bilden.

Weiterhin insbesondere bevorzugt sind die folgenden Verbindungen:

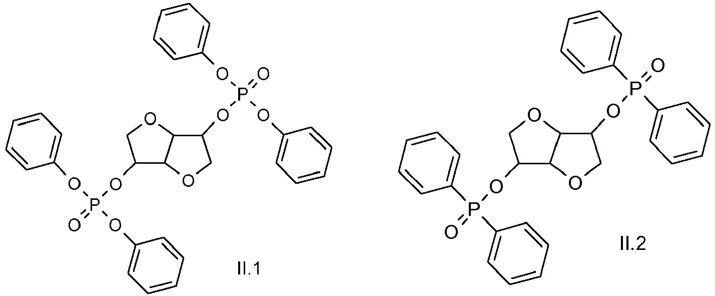

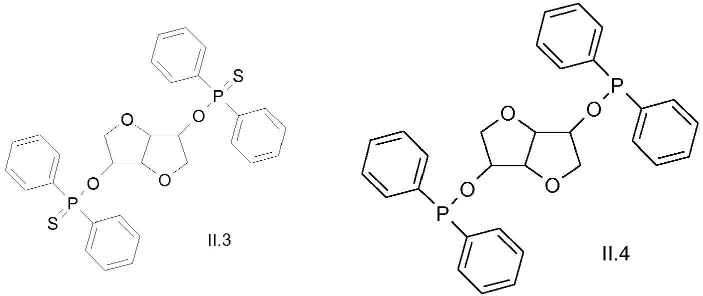

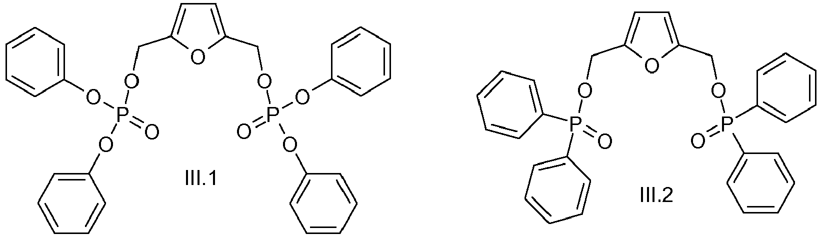

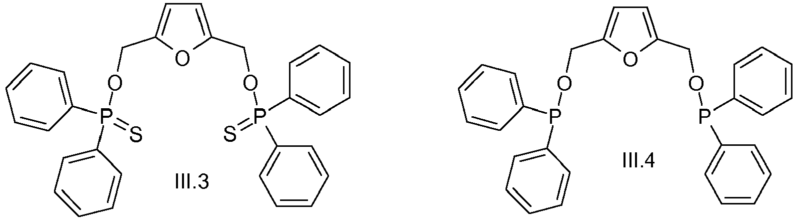

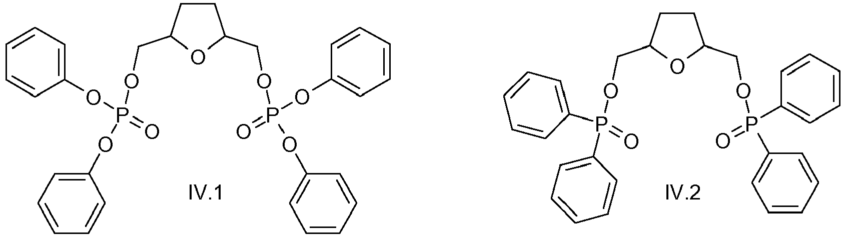

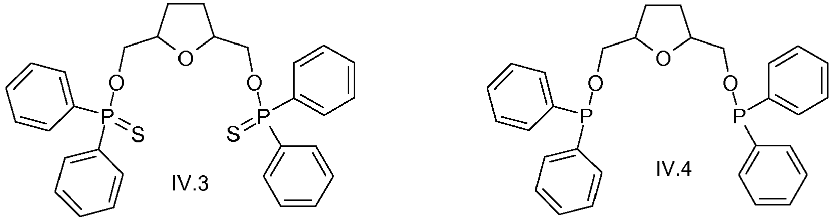

Die Synthese der als Flammschutzagonisten wirkenden phosphorylierten furan- bzw. thiophenbasierten Diole (I) gelingt beispielsweise durch Umsetzung der entsprechenden furan- oder thiophenbasierten Diolgrundkörper (II' bis IV') 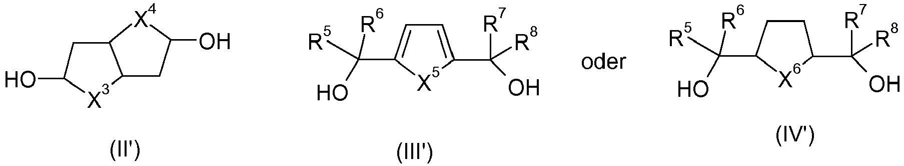 mit den Chlorphosphorverbindungen (V) 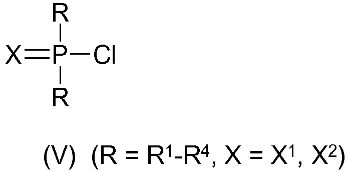 in Gegenwart einer Base. Der hier zugrundeliegende Reaktionstyp der Umsetzung von Chlorphosphorverbindungen mit Alkoholen ist in der Literatur weitreichend bekannt [siehe z.B. WO-A 2003/062251; Dhawan, Balram; Redmore, Derek, J. Org. Chem. (1986), 51(2), 179-83; WO 96/17853; Kumar, K. Ananda; Kasthuraiah, M.; Reddy, C. Suresh; Nagaraju, C, Heterocyclic Communications (2003), 9(3), 313-318; Givelet, Cecile; Tinant, Bernard; Van Meervelt, Luc; Buffeteau, Thierry; Marchand-Geneste, Nathalie; Bibal, Brigitte. J. Org. Chem. (2009), 74(2), 652-659.]

Die furan- oder thiophenbasierten Diol-Grundkörper sind größtenteils kommerziell erhältlich oder können leicht nach literaturbekannten Methoden ausgehend von Zuckern dargestellt werden [siehe z.B.: WO 2006/063287 (Darstellung von 2,5-Bis(hydroxymethyl)tetrahydrofuran); Cottier, Louis; Descotes, Gerard; Soro, Yaya. Synth. Comm. (2003), 33(24), 4285 - 4295),(Darstellung von 2,5-Bis(hydroxymethyl)furan);

CA 2196632, Katritzky, Alan R.; Zhang, Zhongxing; Lang, Hengyuan; Jubran, Nusrallah; Leichter, Louis M.; Sweeny, Norman. J. Heterocycl. Chem. (1997), 34(2), 561-565].

Auch die Darstellung von in 2,5-Position substituierten furanbasierten Derivaten ist in der Literatur wohlbekannt (R⁵ -R⁸ ganz oder teilweise gleich oder verschieden ungleich H):
- z. B. die Darstellung α2,α5-arylierter 2,5-Bis(hydroxymethyl)furane): Ishii, Akihiko; Horikawa, Yasuaki; Takaki, Ikuo; Shibata, Jun; Nakayama, Juzo; Hoshino, Masamatsu, Tetrahedron Lett. (1991), 32(34), 4313-16; Jang, Yong-Sung; Kim, Han-Je; Lee, Phil-Ho; Lee, Chang-Hee. Tetrahedron Lett. (2000), 41(16), 2919-2923,
- z. B. die Darstellung α2,α5-alkylierter 2,5-Bis(hydroxymethyl)furane): Krauss, Juergen; Unterreitmeier, Doris; Antlsperger, Dorothee, Archiv der Pharmazie, (2003), 336(8), 381-384, z. B. die Darstellung α2,α5-alkylierter 2,5-Bis(hydroxymethyl)tetrahydrofurane): Walba, D. M.; Wand, M. D.; Wilkes, M. C., J. Am. Chem. Soc., (1979), 101 (15), 4396-4397, oder
- z. B. die Darstellung α2,α5-alkenylierter 2,5-Bis(hydroxymethyl)tetrahydrofurane): Morimoto, Yoshiki; Kinoshita, Takamasa; Iwai, Toshiyuki, Chirality (2002), 14(7), 578-586.

Auch die Synthese in 2,5-Position unsymmetrisch substituierter furanbasierender Diole dieser Art ist literaturbekannt, z. B. die Darstellung α2-alkylierter 2,5-Bis(hydroxymethyl)tetrahydrofurane: Donohoe, Timothy J.; Williams, Oliver; Churchill, Gwydian H, Angew. Chem. Int. Ed. (2008), 47(15), 2869-2871; oder die Synthese α2-alkylierter, α5-alkinylierter 2,5-Bis(hydroxymethyl)tetrahydrofurane: Abe, Masato; Kubo, Akina; Yamamoto, Shuhei; Hatoh, Yoshinori; Murai, Masatoshi; Hattori, Yasunao; Makabe, Hidefumi; Nishioka, Takaaki; Miyoshi, Hideto. Biochemistry (2008), 47(23), 6260-6266; oder die Darstellung α2-alkoxylierter 2,5-Bis(hydroxymethyl)furane: Lu, Dan; Li, Pingya; Liu, Jinping; Li, Haijun, CN 101544624 A.

Auch ist die Synthese der Thioanaloga (X=S) von (II) ist literaturbekannt [vgl. Kuszmann, J.; Sohar, P., Carbohydrate Research (1972), 21(1), 19-27].

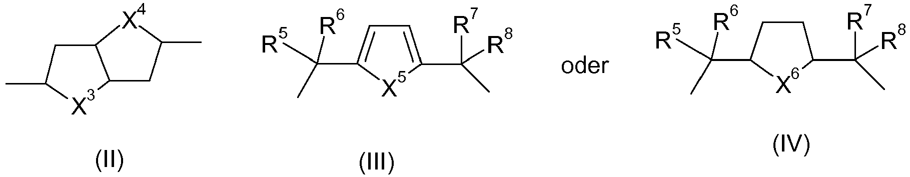

Ebenso ist die Synthese der Thioanaloga (X=S) von (III). [vgl. Garrigues, Bernard., Phosph., Sulfur and Silicon (1990), 53(1-4), 75-9.] und. substituierter Thioanaloga von (III), z.B. α2,α5-arylierter 2,5-Bis(hydroxymethyl)thiophene bekannt [vgl. Kumaresan, D.; Agarwal, Neeraj; Gupta, Iti; Ravikanth, M. Tetrahedron (2002), 58(26), 5347-5356.]

Weiterhin ist die Synthese der Thioanaloga (X=S) von (IV) beschrieben [vgl. Luttringhaus, A.; Merz, H. Archiv der Pharmazie und Berichte der Deutschen Pharmazeutischen Gesellschaft (1960), 293 881-890.] bzw. substituierter Thioanaloga von (IV), z.B. α2,α5-alkylierter 2,5-Bis(hydroxymethyl)tetrahydrothiophene bekannt [vgl. Block, Eric; Ahmad, Saleem. Phosph. Sulfur and the Related Elements (1985), 25(2), 139-145].

Die furan- oder thiophenbasierten Diole liegen teilweise in enantiomeren- bzw. diastereomerenreiner Form vor. Die furan- oder thiophenbasierten Diole können in Form ihrer reinen Enantiomere oder Diastereomere eingesetzt werden. Bevorzugt sind jedoch Mischungen der respektiven Konfigurationsisomere.

Die zur Synthese der Flammschutzagonisten geeigneten Chlorphosphorderivate der Formel (V) 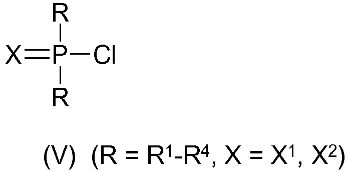 sind üblicherweise kommerziell erhältlich oder lassen sich über in der Literatur gut bekannte Synthesewege darstellen [vgl. Science of Synthesis (former Houben Weyl) 42 (2008**)**; Houben Weyl E1-2 (1982**)**; Houben Weyl 12 (1963-1964**)**]. Als explizite Beispiele seien genannt:
- Chlordiphenylphosphin (X=/; R1 = R2 = Ph), [vgl. Sun, Dengli; Wang, Chunyu; Gong, Shengming; Sun, Shengwen. CN 101481390 A 20090715];
- Diphenylphosphinsäurechlorid (X=O; R1 = R2 = Ph),[vgl. Caminade, Anne Marie; EI Khatib, Fayez; Baceiredo, Antoine; Koenig, Max. Phosphorus and Sulfur and the Related Elements (1987), 29(2-4), 365-7.];
- Diphenylthiophosphinsäurechlorid (X=S; R1 = R2 = Ph), [vgl. Hodgson, Linda M.; Platel, Rachel H.; White, Andrew J. P.; Williams, Charlotte K. Macromolecules (Washington, DC, United States) (2008), 41(22), 8603-8607.];
- Diphenylchlorphosphat (X=O; R1 = R2 = OPh), [vgl. Fadeicheva, A. G.; Rudenko, L. G.; Skuratovskaya, T. N. Metody Polucheniya Khimicheskikh Reaktivov i Preparatov (1969), No. 18 207-9.].

Geeignete Lösemittel sind inerte organische Lösemittel, z.B. DMSO, halogenierte Kohlenwasserstoffe, z.B. Methylenchlorid, Chloroform, 1,2-Dichlorethan und Chlorbenzol. Weiterhin geeignete Lösemittel sind Ether z.B. Diethylether, Methyltertbutylether, Dibutylether, Dioxan oder Tetrahydrofuran. Weiterhin geeignete Lösemittel sind Kohlenwasserstoffe, z.B. Hexan, Benzol oder Toluol. Weiterhin geeignete Lösemittel sind Nitrile z.B. Acetonitril oder Propionitril. Weiterhin geeignete Lösemittel sind Ketone z.B. Aceton, Butanon oder tert.Butyl-methylketon.

Es können auch Gemische der Lösemittel verwendet werden.

Geeignete Basen sind Metallhydride, z.B. Natriumhydrid, oder nicht nukleophile Aminbasen, z.B. Triethylamin, Hünigbase, bicyclische Amine wie 1,8 Diazabicyclo[5.4.0]undec-7-en (DBU), N-Methylimidazol und N-Methylmorpholin, N-Methylpiperidin, Pyridin und substituierte Pyridine wie Lutidin. Besonders bevorzugt sind Triethylamin und N-Methylimidazol.

Die Basen werden im Allgemeinen in äquimolaren Mengen eingesetzt. Sie können aber auch im Überschuss oder gegebenenfalls als Lösemittel eingesetzt werden.

Die Edukte werden im Allgemeinen in stöchiometrischen Mengen im Verhältnis 1:2 (Diol : Chlorphosphorkomponente) umgesetzt. Es kann vorteilhaft sein, die Chlorphosphorkomponente im Überschuss zu den Hydroxyfunktionalitäten des Diols einzusetzen. Statistische partielle Phosphorylierung kann durch Einsatz der Chlorphosphorkomponente im Unterschuss erreicht werden.

Die selektive Einfachphosphorylierung gelingt durch Schützen einer der beiden Diol-Hydroxygruppen im Vorfeld mit Hilfe einer geeigneten Schutzgruppe, welche nach erfolgreicher Phosphorylierungssequenz wieder zu entschützen ist. Geeignete Schutzgruppen sind beispielsweise Silyletherschutzgruppen (TMS, TPDMS) oder Methoxymethylether (MOM). Die Verwendung von Schutzgruppen ist in der einschlägigen Literatur wohlbekannt [vgl. Peter G. M. Wuts, Theodora W. Greene in: Greene's Protective Groups in Organic Synthesis, 4th Edition, VCH Wiley 2006].

Das Heteroatom X kann wie beschrieben direkt durch Kupplung der respektiven Chlorphosphorkomponente eingeführt werden. Eine zweite Möglichkeit stellt zunächst die Kupplung einer dreiwertigen Phosphorspezies an die Hydroxyfunktionalität und subsequente Oxidation zur Einführung des Heteroelementes X mit oxidierenden oder sulfidierenden Reagenzien dar [vgl. Grachev, M. K.; Anfilov, K. L.; Bekker, A. K.; Nifant'ev. E. E. Zhurnal Obshchei Khimii (1995), 65(12), 1946-50].

Die Reaktionen werden üblicherweise bei Temperaturen von 0 °C bis zum Siedepunkt des Reaktionsgemisches, vorzugsweise von 0 °C bis 110 °C, besonders bevorzugt bei Raumtemperatur bis 110 °C durchgeführt.

Die Reaktionsgemische werden in üblicher Weise aufgearbeitet, z.B. durch Filtration, Mischen mit Wasser, Trennung der Phasen und gegebenenfalls chromatographische Aufreinigung der Rohprodukte. Die Produkte fallen z.T. in Form zäher Öle an, die unter vermindertem Druck und bei mäßig erhöhter Temperatur von flüchtigen Anteilen befreit oder gereinigt werden. Sofern die Produkte als Feststoffe erhalten werden, kann die Reinigung auch durch Umkristallisieren oder Digerieren erfolgen.

Die Ausbeute der isolierten Produkte beträgt üblicherweise 40-100 %, bevorzugt 90-100 %.

Bevorzugt wird eine 1 Verbindung der Formel (I) als Flammschutzmittel verwendet.

Weiterhin bevorzugt wird eine Mischung von mindestens zwei, besonders bevorzugt zwei bis vier, insbesondere bevorzugt zwei, Verbindungen der Formel (I) als Flammschutzmittel verwendet.

Die erfindungsgemäß eingesetzten Verbindungen der Formel (I) werden in der Regel in einer Menge im Bereich von 0,1 bis 25 Gew.-%, bezogen auf das zu schützende Material, insbesondere Polymermaterial, eingesetzt. Mengen von 2 bis 15 Gew.-%, bezogen auf das Polymer, gewährleisten insbesondere bei Schaumstoffen aus expandierbarem Polystyrol einen ausreichenden Flammschutz.

Die Wirksamkeit der Verbindungen (I) kann durch den Zusatz geeigneter Flammschutzsynergisten, insbesondere thermischer Radikalbildner, bevorzugt organischer Peroxide, wie Dicumylperoxid oder Di-tert.-butylperoxid, organischer Polysulfide, d.h. Sulfide mit einer Kette aus drei oder mehr Schwefelatomen, oder C-C spaltender Initiatoren, wie Biscumyl (2,3-Diphenyl-2,3-dimethyl-butan), noch weiter verbessert werden. In diesem Falle werden üblicherweise zusätzlich zu der oder den Verbindungen (I) 0,05 bis 5 Gew.-% des Flammschutzsynergisten, bezogen auf das zu schützende Material, insbesondere Polymermaterial, eingesetzt.

Ebenso bevorzugt als Synergist ist elementarer Schwefel, bevorzugt in einem Anteil von 0,05 bis 4 Gew.-%, besonders bevorzugt 0,1 bis 2,5 Gew.-% (bezogen auf das zu schützende Material, insbesondere Polymermaterial).

Der elementare Schwefel kann auch in Form von Ausgangsverbindungen eingesetzt werden, die unter den Verfahrensbedingungen zu elementarem Schwefel zersetzt werden.

Weiterhin ist es möglich, elementaren Schwefel in verkapselter Form einzusetzen. Als Materialien zum Verkapseln eignen sich zum Beispiel Melaminharze (analog US-A 4,440,880) und Harnstoff-Formaldehyd-Harze (analog US-A 4,698,215). Weitere Materialien und Literaturzitate finden sich in der WO 99/10429.

Eine bevorzugte Ausführungsform ist daher auch eine erfindungsgemäße Verwendung, wobei die Verbindung(en) der Formel (I) in Mischung mit einem oder mehreren weiteren flammhemmenden Verbindungen und/oder einem oder mehreren Synergisten eingesetzt werden.

Auch können zusätzlich weitere flammhemmende Materialien, wie Melamin, Melamincyanurate, Metalloxide, Metallhydroxide, Phosphate, Phosphinate und Blähgraphit, oder Synergisten, wie Sb₂O₃ oder Zn-Verbindungen, eingesetzt werden. Geeignete zusätzliche halogenfreie flammhemmende Materialien sind beispielsweise im Handel unter der Bezeichnung Exolit OP 930, Exolit OP 1312, DOPO, HCA-HQ, M-Ester Cyagard RF-1241, Cyagard RF-1243, Fyrol PMP, Phoslite IP-A (Aluminiumhypophosphit), Melapur 200, Melapur MC, APP (Ammoniumpolyphosphat) erhältlich.

Falls auf vollständige Halogenfreiheit verzichtet werden kann, können halogenreduzierte Materialien durch die Verwendung der erfindungsgemäßen Verbindungen (I) und den Zusatz geringerer Mengen an halogenhaltigen, insbesondere bromierten Flammschutzmitteln, wie Hexabromcyclododecan (HBCD), bevorzugt in Mengen im Bereich von 0,05 bis 1, insbesondere 0,1 bis 0,5 Gew.-% (bezogen auf das zu schützende Material, insbesondere die Polymerzusammensetzung) hergestellt werden.

In einer bevorzugten Ausführungsform ist das erfindungsgemäße Flammschutzmittel halogenfrei.

Besonders bevorzugt ist die Zusammensetzung aus dem zu schützenden Material, Flammschutzmittel und weiteren Zusatzstoffen halogenfrei.

Bei dem zu schützenden Material handelt es sich vorzugsweise um eine Polymerzusammensetzung, d.h. eine Zusammensetzung, die ein oder mehrere Polymere enthält und bevorzugt aus einem oder mehreren Polymeren besteht. Bevorzugt sind thermoplastische Polymere. Besonders bevorzugt ist das Polymermaterial ein Schaumstoff.

Die erfindungsgemäßen Flammschutzmittel, d.h. Verbindungen der Formel (I) allein oder in Mischung untereinander und/oder mit Synergisten und/oder weiteren flammhemmenden Substanzen, werden erfindungsgemäß für die Herstellung flammhemmend ausgerüsteter (bzw. flammgeschützter) Polymere, insbesondere thermoplastischer Polymere, verwendet. Hierfür werden die Flammschutzmittel vorzugsweise physikalisch mit dem entsprechenden Polymer in der Schmelze vermischt und dann entweder als Polymermischung mit Phosphorgehalten zwischen 0,05 Gew.-% und 5 Gew.-% (bezogen auf das Polymer) zunächst fertig konfektioniert und dann in einem zweiten Verfahrensschritt zusammen mit demselben oder mit einem anderen Polymer weiterverarbeitet. Alternativ ist im Falle von Styrolpolymeren auch der Zusatz der erfindungsgemäßen Verbindungen (I) vor, während und/oder nach der Herstellung durch Suspensionspolymerisation bevorzugt.

Gegenstand der Erfindung ist auch eine Polymerzusammensetzung enthaltend ein Polymerschaumstoff in Form eines expandierbaren Styrolpolymers (EPS) oder eines Styrolextrusionsschaumstoffes (XPS) und eine oder mehrere Verbindungen der Formel (I) als Flammschutzmittel.

Bevorzugt sind geschäumte Styrolhomopolymere und -copolymere jeweils einzeln oder in Mischung als Polymerblends.

Die flammgeschützten Polymerschaumstoffe weisen bevorzugt eine Dichte im Bereich von 5 bis 200 kg/m³, besonders bevorzugt im Bereich von 10 bis 50 kg/m³, auf und sind bevorzugt zu mehr als 80 %, besonders bevorzugt zu 90 bis 100 % geschlossenzellig.

Die erfindungsgemäßen flammgeschützten, expandierbaren Styrolpolymere (EPS) und Styrolpolymerextrusionsschaumstoffe (XPS) können durch Zugabe des Treibmittels und des erfindungsgemäßen Flammschutzmittels vor, während oder nach der Suspensionspolymerisation oder durch Einmischen eines Treibmittels und des erfindungsgemäßen Flammschutzmittels in die Polymerschmelze und anschließende Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

Erfindungsgemäß umfasst der Begriff Styrolpolymer Polymere, auf Basis von Styrol, alpha-Methylstyrol oder Mischungen von Styrol und alpha-Methylstyrol; analog gilt dies für den Styrolanteil in SAN, AMSAN, ABS, ASA, MBS und MABS (siehe unten). Erfindungsgemäße Styrolpolymere basieren auf mindestens 50 Gew.-% Styrol und/oder alpha-Methylstyrol Monomeren.

In einer bevorzugten Ausführungsform ist das Polymer ein expandierbares Polystyrol (EPS).

In einer weiteren bevorzugten Ausführungsform ist der Schaumstoff ein Styrolpolymerextrusionsschaumstoff (XPS).

Bevorzugt weisen expandierbare Styrolpolymere ein Molekulargewicht M_{w} im Bereich von 120.000 bis 400.000 g/mol, besonders bevorzugt im Bereich von 180.000 bis 300.000 g/mol, gemessen mittels Gelpermeationschromatographie mit refraktiometrischer Detektion (RI) gegenüber Polystyrolstandards, auf. Aufgrund des Molekulargewichtsabbaus durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere, Acrylnitril-Butadien-Styrolpolymerisate (ABS), Styrol-Butadien-Copolymere (SB), Styrol-Acrylnitril-Copolymere (SAN), Acrylnitril-alpha-Methylstyrol-Copolymere (AMSAN), Acrylnitril-Styrol-Acrylester (ASA), Methylmethacrylat-Butadien-Styrol (MBS), Methylmethacrylat-Acrylnitril-Butadien-Styrol (MABS)-polymerisate oder Mischungen davon oder mit Polyphenylenether (PPE) eingesetzt.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des Weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel ein oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Für XPS wird bevorzugt CO₂ oder dessen Mischungen mit Alkoholen und/oder C₂-C₄-Carbonylverbindungen, insbesondere Ketonen, eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischer oder statischer Mischer erreicht werden. In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymere (EPS) ein Expansionsvermögen α, definiert als Schüttdichte vor dem Verschäumen/Schüttdichte nach dem Verschäumen höchstens 125 bevorzugt 15 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B. Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können. Analog können diese Stoffe auch vor, während oder nach der Suspensionspolymerisation zu erfindungsgemäßem EPS zugegeben werden.

Zur Herstellung der erfindungsgemäßen expandierbaren Styrolpolymerisate nach dem Granulierverfahren kann das Treibmittel in die Polymerschmelze eingemischt werden. Ein mögliches Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder.

Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor- Extruder- Granulator
c) Extruder- statischer Mischer- Granulator
d) Extruder- Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Besonders bevorzugt wird ein Verfahren zur Herstellung von halogenfrei flammgeschützten, expandierbaren Styrolpolymeren (EPS), umfassend die Schritte
a) Einmischen eines organischen Treibmittels und 1-25 Gew.-% des erfindungsgemäßen Flammschutzmittels in die Polymerschmelze mittels statischen oder dynamischen Mischer bei einer Temperatur von mindestens 150°C,
b) Kühlen der treibmittelhaltigen Styrolpolymerschmelze auf eine Temperatur von mindestens 120°C
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Bevorzugt ist es auch, die erfindungsgemäßen, expandierbaren Styrolpolymere (EPS) durch Suspensionspolymerisation in wässriger Suspension in Gegenwart des erfindungsgemäßen Flammschutzmittels und eines organischen Treibmittels herzustellen.

Bei der Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylether oder alpha-Methylstyrol ersetzt sein.

Bei der Suspensionspolymerisation können die üblichen Hilfsmittel, wie z.B. Peroxidinitiatoren, Suspensionsstabilisatoren, Treibmittel, Kettenüberträger, Expandierhilfsmittel, Keimbildner und Weichmacher zugesetzt werden. Das erfindungsgemäße Flammschutzmittel wird bei der Polymerisation in Mengen von 0,5 bis 25 Gew.-%, vorzugsweise von 5 bis 15 Gew.-%, zugesetzt. Treibmittel werden in Mengen von 2 bis 10 Gew.-%, bezogen auf Monomer zugesetzt. Man kann sie vor, während oder nach der Polymerisation der Suspension zusetzen. Geeignete Treibmittel sind zum Beispiel aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Bei der Suspensionspolymerisation entstehen perlförmige, im Wesentlichen runde Teilchen mit einem mittleren Durchmesser im Bereich von 0,2 bis 2 mm.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25 %), Glycerintristearat (typischerweise 0,25 %) feinteiliger Kieselsäure Aerosil R972 (typischerweise 0,12 %) und Zn-Stearat (typischerweise 0,15 %), sowie Antistatikum beschichtet werden.

Die erfindungsgemäßen expandierbaren Styrolpolymergranulate können in einem ersten Schritt mittels Heißluft oder Wasserdampf zu Schaumpartikeln mit einer Dichte im Bereich von 5 bis 200 kg/m³, insbesondere 10 bis 50 kg/m³ vorgeschäumt und in einem zweiten Schritt in einer geschlossenen Form zu Partikelformteilen verschweißt werden.

Die expandierbaren Polystyrolteilchen können zu Polystyrolschaumstoffen mit Dichten von 8 bis 200 kg/m³ bevorzugt von 10 bis 50 kg/m³, verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach dem Abkühlen können die Formteile entnommen werden.

In einer weiteren bevorzugten Ausführungsform ist der Schaumstoff ein extrudiertes Polystyrol (XPS), erhältlich durch:
(a) Erhitzen einer Polymerkomponente P zur Ausbildung einer Polymerschmelze,
(b) Einbringen einer Treibmittelkomponente T in die Polymerschmelze zur Ausbildung einer schäumbaren Schmelze,
(c) Extrusion der schäumbaren Schmelze in einen Bereich niedrigeren Drucks unter Aufschäumen zu einem Extrusionsschaum und
(d) Zugabe des erfindungsgemäßen Flammschutzmittels sowie gegebenenfalls weiterer Hilfs- und Zusatzstoffe in mindestens einem der Schritte a) und/oder b).

Erfindungsgemäße Schaumstoffe auf Basis von expandierbarem Styrolpolymer (EPS) oder Styrolextrusionsschaumstoff (XPS) eignen sich beispielsweise zur Verwendung als Dämm- und/oder Isolierstoffe, insbesondere in der Bauindustrie. Bevorzugt ist eine Verwendung als halogenfreies Dämm- und/oder Isoliermaterial, insbesondere in der Bauindustrie.

Erfindungsgemäße Schaumstoffe auf Basis von expandierbarem Styrolpolymer (EPS) oder Styrolextrusionsschaumstoff (XPS) zeigen bevorzugt eine Verlöschzeit (Brandtest B2 nach DIN 4102 bei einer Schaumstoffdichte von 15 g/l und einer Ablagerungszeit von 72 h) von ≤ 15 sec, besonders bevorzugt ≤ 10 sec, und erfüllen damit die Bedingungen zum Bestehen des genannten Brandtests, solange die Flammenhöhe die in der Norm angegebene Messmarke nicht überschreitet.

Die Erfindung wird durch die nachfolgenden Beispiele näher erläutert, ohne sie dadurch zu beschränken.

### Beispiele:

### A. Synthesebeispiele

### Allgemeine Vorschrift zur Synthese der Phosphorester:

In einer 4 L-Standardrührapparatur wird das furanbasierende Diol (2 mol) in Toluol (2000 mL) und Triethylamin (5 mol) bei RT (Raumtemperatur) eingebracht. Bei RT bis 50 °C wird die respektive Chlorphosphorkomponente (4 mol) innerhalb von 5 h zugetropft. Der Ansatz wird über Nacht bei RT nachrührt. Reaktionskontrolle via ³¹P-NMR indiziert quantitativen Umsatz. Bei unvollständigem Umsatz wird die Reaktionszeit verlängert.

Anschließend wird das ausgefallene Triethylammoniumchlorid abfiltriert und der Filterkuchen mit Toluol (1x 300mL) nachgewaschen. Das Filtrat wird mit gesättigter, wässriger Na₂CO₃-Lösung (2 x 500 mL) intensiv ausgeschüttelt, anschließend mit Wasser (2 x 500 mL) nachgewaschen und über Na₂SO₄ getrocknet. Das Na₂SO₄ wird abgesaugt und mit Toluol (1x 300 mL) nachgewaschen. Das Filtrat wird am Rotationsverdampfer im Vakuum eingeengt (65 °C, 77 mbar), anschließend 4 h bei 80°C am Ölpumpenvakuum getrocknet, um das jeweilige Produkt als Rückstand in Ausbeuten von 75-99 % zu erhalten.

### A.1 Synthese von Isosorbid-bis-diphenylphosphat (II.1)

### Apparatur

4000 ml-Rührapparatur, Argoinertisierung

### Ansatz:

| | |
|---|---|
| 298,2 g (2,0 mol) | Isosorbid 98 % |
| 506 g (5,0 mol) | Triethylamin |
| 2000 mL | Toluol |
| 1120 g (4,0 mol) | Chlordiphenylphosphat 96 % |

In einer 4 L-Standardrührapparatur wurde Isosorbid (298,2 g, 2 mol) in Toluol (2000 mL) und Triethylamin (506 g, 5,0 mol) bei Raumtemperatur (RT) eingebracht. Bei 22 bis 42°C wurde Chlordiphenylphosphat (1120 g, 4,0 mol) innerhalb von 5 h zugetropft. Der gelbe, trübe Ansatz wurde über Nacht bei RT nachrührt. Reaktionskontrolle durch ³¹P-NMR zeigte einen quantitativen Umsatz.

Das ausgefallene Triethylammoniumchlorid wurde abfiltriert und mit Toluol (1x 300mL) nachgewaschen. Das Filtrat wurde mit gesättigter, wässriger Na₂CO₃-Lösung (2 x 500 mL) intensiv ausgeschüttelt, anschließend mit Wasser (2 x 500 mL) nachgewaschen und über Na₂SO₄ über Nacht getrocknet. Das Na₂SO₄ wurde abgesaugt und mit Toluol (1x 300 mL) nachgewaschen. Das Filtrat wurde am Rotationsverdampfer im Vakuum eingeengt (65 °C, 77 mbar) und anschließend 4 h bei 80°C am Ölpumpenvakuum getrocknet.

Das Produkt wurde als rotbraunes Öl (1046g, 86 % d.Th.) erhalten, Reinheit >96 % (basierend auf P-NMR).

Eine wässrige Emulsion des Produkts wies einen pH- Wert von 5,0 auf.

### Analytische Daten:

³¹P-NMR (toluol_{*d*8}), [ppm] : -11.2 (d, ³J_{P,H}=7 Hz), -11.9 (d, ³J_{P,H}=7 Hz) (2 Isomere).
¹H-NMR (toluol_{*d*8}), [ppm] : 7.37-7.22 (m, 8 H, ar), 7.16-7.00 (m, 8 H, ar), 7.00-6.89 (m, 4H, ar), 5.15-5.01 (m, 1 H, CH_{isosorbid}), 4.95-4.82 (m, 1 H, CH_{isosorbid}), 4.62-4.52 (m, 1 H, CH_{isosorbid}), 4.50-4.40 (m, 1 H, CH_{isosorbid}), 4.08-3.96 (m, 1 H, CH_{isosorbid}), 3.83-3.71 (m, 1 H, CH_{isosorbid}), 3.69-3.59 (m, 1 H, CH_{isosorbid}), 3.59-3.47 (m, 1 H, CH_{isosorbid}).

### Analog wurden folgenden Verbindungen erhalten:

### A.2 Isosorbid-O,O'-bis(diphenylphosphinsäureester) (II.2)

### Analytische Daten:

**¹H-NMR** (360 MHz, Toluol-d₈, 300 K): = 3.62 (dd, 1 H, C*H*₂, ³J=6.2 Hz, ²J= 9.2 Hz), 3.69 (dd, 1H, C*H*₂, ³J=6,5 Hz, ²J= 9.3 Hz), 3.77 (dd, 1H, C*H*₂, ³J=3.2 Hz, ²J= 10.6 Hz), 4.17 (d, 1H, C*H*₂, ²J= 10.6 Hz), 4.46 (d, 1H, C*H*_{Isosorbid}, ³J=4.4 Hz), 4.52 (d, 1 H, C*H*_{Isosorbid}, ³J=4.4 Hz), 4.60-4.68 (m, C*H*_{Isosorbid}), 4. 85 (dd, 1 H, C*H*_{Isosorbid}, ³J=3.0 Hz, ³J=8.1 Hz), 7.04-7.15 (m, 12H, C*H_{m,p}*), 7.96-8.03 (m, 8H, C*H*ₒ) ppm.
**¹³C-NMR** (90 MHz, CDCl₃, 300 K): δ = 70.1 (d, CH₂, ³J_{C-P}=3.7 Hz), 73.7 (d, *C*H_{Isosorbid}, J_{C-P}=6.0 Hz), 74.0 (d, CH₂, ³J_{C-P}=3.7 Hz), 78.3 (d, *C*H_{Isosorbid}, J_{C-P}=5.7 Hz), 80.6 (d, *C*H_{Isosorbid}, J_{C-P}=4.7 Hz), 85.8 (d, *C*H_{Isosorbid}, J_{C-P}=5.3 Hz), 127.9 (d, CH_{*m*,Isomere}, ³J_{C-P}=13.3 Hz), 128.0 (d, *C*H_{*m*,Isomere}, ³J_{C-P}=13.0 Hz), 128.0 (d, *C*H_{*m*,Isomere}, ³J_{C-P}=13.3 Hz), 128.0 (d, *C*H_{*m*,Isomere}, ³J_{C-P}=13.3 Hz), 129.5 (d, *C*H_{i,Isomere}, ¹J=9.3 Hz), 129.7 (d, *C*H_{i,Isomere}, ¹J=25.9 Hz), 130.8 (d, *C*H_{o,Isomere}, ²J=10.3 Hz), 130.8 (d, 2C, *C*H_{o,Isomere}, ²J_{C-P}=10.3 Hz), 131.0 (d, *C*H_{*i*,Isomere}, ¹J_{C-P}=8.0 Hz), 131.2 (d, *C*H_{o,Isomere}, ²J_{C-P}=10.3 Hz), 131.2 (d, *C*H_{*i*,Isomere}, ¹J_{C-P}=27.6 Hz), 131.9 (m, 4C, *C*H_{*p*,Isomere}) ppm.
**³¹P-NMR** (145 MHz, Toluol-d₈, 300 K): δ = 26.170 (m), 26.6 (m) ppm.
**ESI(+)-HRMS** (m/z): ber.: 547.1439 [C₃₀H₂₉O₆P₂]⁺ gef.: 547.1416 [M+H]⁺.
**Thermogravimetrische Analyse (TGA)** (unter Argon): 302 °C (2 % Massenverlust), 340 °C (5 % Massenverlust), 358 °C (10 % Massenverlust).
**A.3 Isosorbid-*O*,*O*'-bis(diphenylthiophosphinsäureester) (II.3)**

### Analytische Daten:

**¹H-NMR** (360 MHz, CDCl₃, 300 K): = 3.68 (dd, 1 H, C*H*₂, ³J=7.1 Hz, ²J= 9.2 Hz), 3.82 (dd, 1 H, C*H*₂, ³J=6.2 Hz, ²J= 9.2 Hz), 3.96 (dd, 1 H, C*H*₂, ³J=3.7 Hz, ²J= 10.6 Hz), 4.11 ("d", 1 H, C*H*₂, J=10.6 Hz), 4.55 ("d", C*H*_{Isosorbid}, ³J=4.7 Hz), 4.71 (t, 1 H, C*H*_{Isosorbid}, ³J=4.6 Hz), 4.97 (m, C*H*_{Isosorbid}), 5.10 (dd, 1 H, C*H*_{Isosorbid}, ³J=3.0 Hz, ³J=11.8 Hz), 7.35-7.50 (m, 12H, C*H*_{*m*,*p*}), 7.78-8.00 (m, 8H, C*H*ₒ) ppm.
**¹³C-NMR** (90 MHz, CDCl₃, 300 K): δ = 70.3 (d, CH₂, ³J_{C-P}=4.0 Hz), 74.4 (m, 2C, CH₂, *C*H_{Isosorbid}) 79.0 (d, *C*H_{Isosorbid}, J_{C-P}=5.3 Hz), 81.2 (d, *C*H_{Isosorbid}, J_{C-P}=5.0 Hz), 86.3 (d, *C*H_{Isosorbid}, J_{C-P}=5.6 Hz), 128.4 (d, 2C, *C*H_{*m*,Isomere2}, ³J_{C-P}=13.3 Hz), 128.5 (d, CH_{*m*,Isomere}, ³J_{C-P}=13.3 Hz), 128.5 (d, CH_{*m*,Isomere}, ³J_{C-P}=13.6 Hz), 131.0 (d, *C*H_{o,Isomere}, ²J=11.6 Hz), 130.0 (d, *C*H_{o,Isomere}, ²J=11.3 Hz), 131.0 (d, *C*H_{o,Isomere}, ²J=11.3 Hz), 131.3 (d, *C*H_{o,Isomere}, ²J_{C-P}=11.6 Hz), 132.0 (m, 4C, CH_{*p*,Isomere}), 133.6 (d, *C*H_{i,Isomere}, ¹J_{C-P}=19.9 Hz), 133.7 (d, *C*H_{*i*,Isomere}, ¹J_{C-P}=2.0 Hz), 134.8 (d, *C*H_{*i*,Isomere}, ¹J_{C-P}=20.6 Hz), 134.9 (d, *C*H_{*i*,Isomere}, ¹J_{C-P}=3.0 Hz) ppm.
**³¹P-NMR** (145 MHz, CDCl₃, 300 K): δ = 83.3 (m), 84.8 (m) ppm.
**ESI(+)-HRMS** (m/z): ber.: 579.0983 [C₃₀H₂₉O₄P₂ S₂]⁺ gef.: 579.1016 [M+H]⁺.

| | |
|---|---|
| **Elementaranalyse** [%]: | ber.: C: 62.3; O: 11.1; S: 11.1; H: 4.9 |
| | gef.: C: 61.1; O: 11.3; S: 11.9; H: 4.8 |

**TGA** (unter Argon): 293 °C (2 % Massenverlust), 319 °C (5 % Massenverlust), 335 °C (10 % Massenverlust).

### A.4 Isosorbid-O,O'-bis(diphenylphosphinit) (II.4)

### Analytische Daten:

**¹H-NMR** (360 MHz, Toluol-d₈, 300 K): = 3.49 (dd, 1 H, C*H₂*, ³J=6.2 Hz, ²J= 9.0 Hz), 3.62 (dd, 1H, C*H₂*, ³J=6,7 Hz, ²J= 9.0 Hz), 3.71 (dd, 1H, C*H₂*, ³J=3.2 Hz, ²J= 10.4 Hz), 3.95 ("d", 1 H, C*H₂*, J= 10.2 Hz), 4.01-4.09 (m, 1 H, C*H*_{Isosorbid}), 4.34 (dd, 1H, C*H*_{Isosorbid}, ³J=0.93 Hz, ³J= 4.16 Hz), 4.40 (dd, C*H*_{Isosorbid}, ³J=3.2 Hz, ³J= 9.3 Hz), 4.49 (t, 1H, C*H*_{*I*sosorbid}, ³J=4.6 Hz), 6.99-7.13 (m, 12H, *C*H*_{m,p}*), 7.42-7.54 (m, 6H, C*H*ₒ), 7.62-7.67 (m, 2H, C*H*ₒ) ppm.
**¹³C-NMR** (90 MHz, CDCl₃, 300 K): δ = 71.0 (d, CH₂, ³J_{C-P}=6.6 Hz), 74.9 (d, CH₂, ³J_{C-P}=7.0 Hz), 79.7 (d, CHOP, ²J_{C-P}=17.6 Hz), 81.4 (d, CHOC, ³J_{C-P}=4.0 Hz), 83.6 (d, CHOP, ²J_{C-P}=18.6 Hz), 92.0 (d, CHOC, ³J_{C-P}=6.3 Hz), 128.2 (d, CH_{*m*,Isomere}, ³J_{C-P}=7.0 Hz), 128.3 (d, *C*H_{*m*,Isomere}, ³J_{C-P}=7.0 Hz), 128.3 (d, *C*H_{*m*,Isomere}, ³J_{C-P}=7.0 Hz), 128.4 (d, *C*H_{*m*,Isomere}, ³J_{C-P}=7.0 Hz), 129.3 (s, 2C, *C*H*ₚ*), 129.5 (s, *C*H*ₚ*), 129.53 (s, *C*H*ₚ*), 130.1 (d, *C*H_{*o*,Isomere}, ²J_{C-P}=21.6 Hz), 130.4 (d, *C*H_{*o*,Isomere}, ²J_{C-P}=22.3 Hz), 130.4 (d, *C*H_{*o*,Isomere}, ²J_{C-P}=21.9 Hz), 130.5 (d, *C*H_{*o*,Isomere}, ²J_{C-P}=21.6 Hz), 141.2 (d, *C*H_{*i*,Isomere}, ¹J_{C-P}=15.6 Hz), 141.4 (d, *C*H_{*i*,Isomere}, ¹J_{C-P}=16.3 Hz), 141.5 (d, *C*H_{*i*,Isomere}, ¹J_{C-P}=15.3 Hz), 141.7 (d, *C*H_{*i*,Isomere}, ¹J_{C-P}=17.0 Hz) ppm.
**³¹P-NMR** (145 MHz, Toluol-d₈, 300 K): δ = 112.2 (Sextett, 7.8 Hz), 116.0 (Sextett, 8.0 Hz) ppm.

| | |
|---|---|
| **ESI(+)-HRMS** (m/z): | ber.: 515.1541 [C₃₀H₂₉O₄P₂]⁺ |
| | gef.: 515.1510 [M+H]⁺. |

**TGA** (unter Argon): 300 °C (2 % Massenverlust), 322 °C (5 % Massenverlust), 337 °C (10 % Massenverlust).

### A.5 Furan-2,5-yl-dimethyl-2,5-bis(diphenylphosphinsäureester) (III.2)

### Analytische Daten:

**¹H-NMR** (500 MHz, Toluol-d₈, 300 K): = 4.79 (d, 4H, C*H*₂, ³J_{P-H}=8.2 Hz), 5.89 (s, 2H, C*H_{Furan}*), 7.01-7.07 (m, 12H, C*H*_{*m*,*p*}), 7.82-7.87 (m, 8H, C*H*ₒ) ppm.
**¹³C-NMR** (125 MHz, Toluol-d₈, 300 K): δ = 58.1 (d, CH₂, ²J_{C-P}=5.2 Hz), 111.6 (s, CH), 128.6 (d, *C*H*ₘ*, ³J_{C-P}=13,2 Hz), 131.9 (d, *C*H*ₚ*, ⁴J_{C-P}=2.9 Hz), 132.1 (d, *C*H*ₒ*, ²J_{C-P}=9.7 Hz), 133.0 (d, *C*H*ᵢ*, ¹J_{C-P}=135.4 Hz) ppm.
**³¹P-NMR** (145 MHz, Toluol-d₈, 300 K): δ = 31,2 (m) ppm.

| | |
|---|---|
| **ESI(+)-HRMS** (m/z): | ber.: 529.1334 [C₃₀H₂₇O₅P₂]⁺ |
| | gef.: 529.1328 [M+H]⁺. |

**TGA** (unter Argon): 155 °C (2 % Masseverlust), 160 °C (5 % Masseverlust), 200 °C (10 % Masseverlust).

### A.6 2,3,4,5-Tetrahydrofuran-2,5-yl-dimethyl-2,5-bis(diphenylphosphatester) (IV.1)

### Analytische Daten:

**¹H-NMR** (360 MHz, Toluol-d₈, 300 K): = 1.29-1.35 (m, 4H, C*H*_{2, THF}), 3.78-3.82 (m, 2H, C*H*_{THF}), 3.91-4.05 (m, 4H, C*H*_{2, Methylen}), 6.81-6.85 (m, 4H, C*Hₚ*), 6.98-7.03 (m, 8H, C*Hₘ*), 7.27-7.30 (m, 8H, C*Hₒ*) ppm.
**¹³C-NMR** (125 MHz, Toluol-d₈, 300 K): δ = 27.3 (s, CH_{2,THF}), 70.5 (d, *C*H_{2,Methylen}, ²J_{C-P}=6.3 Hz), 78.1 (d, *C*H_{THF}, ³J_{C-P}=7.5 Hz), 120.6 (d, *C*H*ₒ*, ²J_{C-P}=4.6 Hz), 125.4 (s, CH*ₚ*), 129.9 (s, CH*ₘ*), 151.4 (d, *C*H*_{i,Isomer1}*, ¹J_{C-P}=6.9 Hz), 151.4 (d, *C*H*_{i,Isomere2}*, ¹J_{C-P}=6.9 Hz) ppm.
**³¹P-NMR** (145 MHz, Toluol-d₈, 300 K): δ = -15.8 ("t", J=18.4 Hz) ppm.

| | |
|---|---|
| **ESI(+)-HRMS** (m/z): | ber.: 597.1443 [C₃₀H₃₁O₉P₂]⁺ |
| | gef.: 597.1429 [M+H]⁺. |

**TGA** (unter Argon): 260 °C (2 % Masseverlust), 265 °C (5 % Masseverlust), 270 °C (10 % Masseverlust).

### A.7 2,3,4,5-Tetrahydrofuran-2,5-yl-dimethyl-2,5-bis(diphenylphosphin-säureester) (IV.2)

### Analytische Daten:

**¹H-NMR** (360 MHz, Toluol-d₈, 300 K): = 1.44-1.46 (m, 4H, *C*H_{2,THF}), 3.88-3.91 (m, 4H, C*H*_{2,Methylen}), 3.97-4.03 (m, 2H, C*H*_{THF}), 7.08-7.18 (m, 12H, C*H*_{*m*,*p*}), 7.89-7.89 (m, 8H, C*Hₒ*) ppm.
**¹³C-NMR** (90 MHz, CDCl₃, 300 K): δ = 27.3 (s, CH_{2, THF}), 66.2 (d, CH_{2,Methylen}, ²J_{C-P}=6.0 Hz), 78.1 (d, CH_{THF}, ³J_{C-P}=7.3 Hz), 128.2 (d, *CH*_{*m,Isomer1*/}*₂,* ³J_{C-P}=2.0 Hz), 128.4 (d, *CH*_{*m,Isomer1*/}*₂,* ³J_{C-P}=2.0 Hz), 130.1 (d, *CH*_{*i,Isomer1*/}*₂,* ¹J_{C-P}=10.6 Hz), 131.3 (d, *C*H_{*o, Isomer1*/}*₂,* ²J_{C-P}=10.3 Hz), 131.4 (d, *C*H_{*o, Isomer1*/*2*}, ²J_{C-P}=10.0 Hz), 131.6 (d, *CH*_{*i, Isomer1*/*2*}, ¹J_{C-P}=11.0 Hz), 132 ("t", *C*H_{*p*,*Isomer*1/2}*)* ppm.
**³¹P-NMR** (145 MHz, Toluol-d₈, 300 K): δ = 25.2 (m) ppm.

| | |
|---|---|
| **ESI(+)-HRMS** (m/z): | ber.: 533.1647 [C₃₀H₃₁O₅P₂]⁺ |
| | gef.: 533.1629 [M+H]⁺. |

**TGA** (unter Argon): 307 °C (2 % Massenverlust), 320 °C (5 % Massenverlust), 323 °C (10 % Massenverlust).

### A.8 2,3,4,5-Tetrahydrofuran-2,5-yl-dimethyl-2,5-bis(diphenylthiophosphinsäureester) (IV.3)

### Analytische Daten:

**¹H-NMR** (360 MHz, CDCl₃, 300 K): = 1.65-1.80 (m, 2H, C*H*_{2, THF}), 1.82-2.00 (m, 2H, C*H*_{2, THF}), 3.90-4.04 (m, 4H, C*H*_{2, Methylen}), 4.15-4.30 (m, 2H, C*H*_{THF}), 7.32-7.43 (m, 12H, C*H*_{*m*, *p*}), 7.82-7.93 (m, 8H, C*Hₒ*) ppm.
**¹³C-NMR** (125 MHz, CDCl₃, 300 K): δ = 27.5 (s, CH_{2,THF}), 66.3 (d, CH_{2,Methylen}, ²J_{C-P}= 6.0 Hz), 78.1 (d, *C*H_{THF}, ³J_{C-P}=8.6 Hz), 128.2 (d, *CH*_{*m,Isomer*1/2}, ³J_{C-P}=4.6 Hz), 128.3 (d, *CH*_{*m,Isomer1*/*2*}, ³J_{C-P}=4.0 Hz), 130.9 (d, *CH*_{*o,Isomer*1/2}, ²J_{C-P}=13.8 Hz), 131.0 (d, *C*H_{*o,Isomer*1/2}, ³J_{C-P}=13.8 Hz), 131.7 (d, *C*H_{*p,Isomer*1/2}, ⁴J_{C-P}=2.9 Hz), 131.7 (d, *C*H_{*p,Isomer*1/2}, ⁴J_{C-P}=2.9 Hz), 133.6 (d, *C*H_{*i,Isomer*1/2}, ¹J_{C-P}=27.0 Hz), 134.5 (d, *CH*_{*i,Isomer*1/2}, ¹J_{C-P}=27.0 Hz) ppm.
**³¹P-NMR** (145 MHz, CDCl₃, 300 K): δ = 83.2 (m) ppm.

| | |
|---|---|
| **ESI(+)-HRMS** (m/z): | ber.: 565.1190 [C₃₀H₃₁O₂P₂S₂]⁺ |
| | gef.: 565.1165 [M+H]⁺. |

**TGA** (unter Argon): 323 °C (2 % Massenverlust), 329 °C (5 % Massenverlust), 333 °C (10 % Massenverlust).

### A.9 2,3,4,5-Tetrahydrofuran-2,5-yl-dimethyl-2,5-bis(diphenyl-phosphinit) (IV.4)

### Analytische Daten:

**¹H-NMR** (360 MHz, CDCl₃, 300 K): = 1.67-1.94 (m, 4H, C*H*_{2,THF}), 3.71-3.85 (m, 4H, C*H*_{2,Methylen}), 4.08-4.22 (m, 2H, C*H*_{THF}), 7.25-7.32 (m, 12H, C*H*_{*m*,*p*}), 7.44-7.52 (m, 8H, C*Hₒ*) ppm.
**¹³C-NMR** (125 MHz, CDCl₃, 300 K): δ = 27.7 (s, CH_{2, THF}), 72.1 (d, CH₂, Methylen , ²J_{C-P}=17.8 Hz), 79.0 (d, CH_{THF}, ³J_{C-P}=8.0 Hz), 128.1 (d, CH*ₘ*, ³J_{C-P}=6.9 Hz), 129.1 (s, CH*ₚ*), 130.2 (d, *C*H*ₒ*, ²J_{C-P}=21.8 Hz), 141.7 (d, *C*H_{i Isomer1}, ¹J_{C-P}=5.7 Hz), 141.9 (d, *C*H_{i Isomer2}, ¹J_{C-P}=6.3 Hz) ppm.
**³¹P-NMR** (145 MHz, CDCl₃, 300 K): δ = 115.7 (Produkt, "Heptett", J=7.6 Hz), 116.4 (Nebenprodukt, "Quintett", J=7.6 Hz) ppm.

| | |
|---|---|
| **ESI(+)-HRMS** (m/z): | ber.: 501.1748 [C₃₀H₃₁O₃P₂]⁺ |
| | gef.: 501.1762 [M+H]⁺. |

**TGA** (unter Argon): 310 °C (2 % Masseverlust), 336 °C (5 % Masseverlust), 347 °C (10 % Masseverlust).

### B. Anwendungsbeispiele

### Flammschutztests:

### Beschreibung der Versuche:

Die Ermittlung des Brandverhaltens der Schaumstoffplatten erfolgte, wenn nicht anders angegeben, bei einer Schaumstoffdichte von 15 kg/m³ nach DIN 4102 (Brandtest B2).

Als Vergleich wurde Hexabromcyclododecan (im Folgenden als HBCD bezeichnet) eingesetzt.

### Expandierbare Styrolpolymerisate (Extrusionsprozess)

7 Gew.-Teile n-Pentan wurden in eine Polystyrolschmelze aus PS 148H (Mw = 240 000 g/mol, Mn = 87 000 g/mol, bestimmt mittels GPC, RI-Detektor, Polystyrol (PS) als Standard) der BASF SE mit einer Viskositätszahl VZ von 83 ml/g eingemischt. Nach Abkühlen der treibmittelhaltigen Schmelze von ursprünglich 260°C auf eine Temperatur von 190°C, wurde eine Polystyrolschmelze, welche die in der Tabelle genannten Flammschutzmittel enthielt, über einen Seitenstromextruder in den Hauptstrom eingemischt.

Die angegebenen Mengen in Gew.-Teilen beziehen sich auf die gesamte Polystyrolmenge.

Das Gemisch aus Polystyrolschmelze, Treibmittel und Flammschutzmittel wurde mit 60 kg/h durch eine Düsenplatte mit 32 Bohrungen (Durchmesser der Düsen 0,75 mm) gefördert. Mit Hilfe einer druckbeaufschlagten Unterwassergranulierung wurden kompakte Granulate mit enger Größenverteilung hergestellt.

Das Molekulargewicht der Granulate betrug 220 000 g/mol (Mw) bzw. 80 000 g/mol (Mn) (bestimmt mittels GPC, RI-Detektor, PS als Standard). Durch Einwirkung von strömendem Wasserdampf wurden die Granulate vorgeschäumt und nach 12-stündiger Lagerung durch weitere Behandlung mit Wasserdampf in einer geschlossenen Form zu Schaumstoffblöcken einer Dichte von 15 kg/m3 verschweißt. Die Ermittlung des Brandverhaltens der Schaumstoffplatten erfolgte nach 72-stündiger Lagerung bei einer Schaumstoffdichte von 15 kg/m3 nach DIN 4102.

Die Ergebnisse sind in Tabelle 1a (B.1-B.12) zusammengestellt.

### Expandierbare Styrolpolymerisate (Suspensionsprozess)

Für die Herstellung von EPS wurden Dibenzoylperoxid, Dicumylperoxid, gegebenenfalls weitere Synergisten und Ceridust 3620 (Polyethylenwachs, Clariant) in Styrol gelöst. Dazu wurde das erfindungsgemäße, phosphorhaltige Flammschutzmittel gegeben. Die organische Phase wurde in vollentsalztes Wasser in einem Rührkessel eingebracht. Die wässrige Phase enthielt weiterhin Natriumpyrophosphat und sowie Magnesiumsulfat *Heptahydrat (Bittersalz). Man erhitzte die Suspension innerhalb von 1,75 Stunden auf 104°C und anschließend binnen 5,5 Stunden auf 136°C. 1.8 Stunden nach Erreichen von 80°C wurde Emulgator K30 (ein Gemisch verschiedener linearer Alkylsulfonate, Lanxess AG) zudosiert. Nach einer weiteren Stunde wurden 7,8 Gew.-% Pentan nachdosiert. Schließlich wird bei einer Endtemperatur von 136°C auspolymerisiert.

Die erhaltenen treibmittelhaltigen Polystyrolperlen wurden abdekantiert, von Innenwasser getrocknet und mit einem Standard EPS Coating beschichtet.

Durch Einwirkung von strömendem Wasserdampf wurden die treibmittelhaltigen Polystyrolperlen vorgeschäumt und nach 12-stündiger Lagerung durch weitere Behandlung mit Wasserdampf in einer geschlossenen Form zu Schaumstoffblöcken einer Dichte von 15 kg/m3 verschweißt. Die Ermittlung des Brandverhaltens der Schaumstoffplatten erfolgte nach 72-stündiger Lagerung bei einer Schaumstoffdichte von 15 kg/m3 nach DIN 4102.

Die Ergebnisse Suspensionspolymerisation sind in Tabelle 1 b (B.13-B.20) zusammengestellt.

**Tabelle 1a: Brandverhalten von erfindungsgemäßer Polymerzusammensetzung (Beispiele) und von Vergleichsbeispielen (kursiv geschrieben)**

| **Beispiel** | **Flammschutzmittel (Gew.-Teile bezogen auf 100 Gew.-Teile Polystyrol)** | **Zusatz Synergist (Gew.-Teile bezogen auf 100 Gew.-Teile Polystyrol)** | **Brandtest (B2 nach DIN 4102) / Verlöschzeit (s)** |
|---|---|---|---|
| ***V1*** | - | - | *nicht bestanden* / *brennt ab* |
| ***V2*** | *HBCD (4, 0)* | - | *bestanden* / *6,4* s |
| **B.1** | II.1 (2,5) | Schwefel (2,5) | bestanden / 5,7 s |
| **B.2** | II.2 (2,5) | Schwefel (2,5) | bestanden / 5,9 s |
| **B.3** | II.3 (2,5) | Schwefel (2,5) | bestanden / 7,0 s |
| **B.4** | II.4 (2,5) | Schwefel (2,5) | bestanden / 5,7 s |
| **B.5** | III.1 (5,0) | Schwefel (5,0) | bestanden / 7,9 s |
| **B.6** | III.2 (5,0) | Schwefel (5,0) | bestanden / 8,7 s |
| **B.7** | III.3 (5,0) | Schwefel (5,0) | bestanden / 8,8 s |
| **B.8** | III.4 (5,0) | Schwefel (5,0) | bestanden / 9,1 s |
| **B.9** | IV.1 (5,0) | Schwefel (2,5) | bestanden / 6,6 s |
| **B.10** | IV.2 (2,5) | Schwefel (2,5) | bestanden / 6,6 s |
| **B.11** | IV.3 (2,5) | Schwefel (2,5) | bestanden / 7,0 s |
| **B.12** | IV.4 (2,5) | Schwefel (2,5) | bestanden / 7,5 s |

**Tabelle 1b: Brandverhalten von erfindungsgemäßer Polymerzusammensetzung (Beispiele) und von Vergleichsbeispielen (kursiv geschrieben)**

| **Beispiel** | **Flammschutzmittel (Gew.-% bezogen auf Styrol)** | **Synergist (Gew.-% bezogen auf Styrol)** | **Brandtest (B2 nach DIN 4102) / Verlöschzeit (s)** |
|---|---|---|---|
| ***V3*** | - | - | *nicht bestanden* / *brennt ab* |
| ***V4*** | *HBCD (3, 5)* | - | *bestanden* / *7,1 s* |
| **B.13** | II.1 (5,0) | DCP¹ (1,5) | bestanden / 6,4 s |
| **B.14** | II.1 (6,0) | DCP¹ (1,7) | bestanden / 5.6 s |
| **B.15** | II.2 (6,0) | DCP¹ (1,5) | bestanden / 9,2 s |
| **B.16** | II.3 (6,0) | DCP¹ (1,5) | bestanden / 7,4 s |
| **B.17** | II.4 (6,0) | DCP¹ (1,5) | bestanden / 10,6 s |
| **B.18** | IV.1 (6,0) | DCP¹ (1,7) | bestanden / 8,7 s |
| **B.19** | IV.3 (6,0) | DCP¹ (1,7) | bestanden / 6,9 s |
| **B.20** | IV.4 (5,0) | DCP (1,7) | bestanden / 11,2 s |

| | | | |
|---|---|---|---|
| 1: Dicumylperoxid (CAS: 80-43-3) | | | |

**Tabelle 2: Einfluss der Schaumstoffdichte von Polystyrolschaumstoffprüfkörpern hergestellt aus EPS auf das Brandergebnis. Die in den Beispielen beschriebenen Teile sind Gewichtsteile.**

| **Bsp.** | **Flammschutzmittel (Gew.-Teile)** | **Schaumstoffdichte [kg/m3] (ISO 845)** | **Brandtest (B2 nach DIN 4102) / Verlöschzeit (s)** |
|---|---|---|---|
| **B.1** | II.1 (2,5) + Schwefel (2,5) | 15,8 | bestanden / 5,7 s |
| **B.21** | II.1 (2,5) + Schwefel (2,5) | 61,5 | bestanden /10,2 s |
| **B.22** | II.1 (2,5) + Schwefel (2,5) | 109,3 | bestanden / 13,6 s |

### Extrudierte Polystyrol-Schaumstoffplatten

100 Gew.-Teile Polystyrol 158K (Mw = 261 000 g/mol, Mn = 77 000 g/mol bestimmt mittels GPC, RI-Detektor, PS als Standard) der BASF SE mit einer Viskositätszahl von 98 ml/g, 0,1 Teile Talkum als Keimbildner zur Regelung der Zellgröße und die in der Tabelle angegebenen Teile an Flammschutzmitteln sowie gegebenenfalls Schwefel oder anderen Synergisten wurden einem Extruder mit einem inneren Schneckendurchmesser von 120 mm kontinuierlich zugeführt. Durch eine in den Extruder angebrachte Einlassöffnung wurde gleichzeitig ein Treibmittelgemisch aus 3,25 Gew.-Teilen Ethanol und 3,5 Gew.-Teilen CO₂ kontinuierlich eingedrückt. Das in dem Extruder bei 180 °C gleichmäßig geknetete Gel wurde durch eine Beruhigungszone geführt und nach einer Verweilzeit von 15 Minuten mit einer Austrittstemperatur von 105 °C durch eine 300 mm breite und 1,5 mm weite Düse in die Atmosphäre extrudiert. Der Schaum wurde durch einen mit dem Extruder verbundenen Formkanal geführt, wobei eine geschäumte Plattenbahn mit einem Querschnitt 650 mm x 50 mm und einer Dichte von 35 g/l entstand. Das Molekulargewicht des Polystyrols betrug 240 000 g/mol (Mw) bzw. 70 000 g/mol (Mn) (bestimmt mittels GPC, RI-Detektor, PS als Standard). Das Produkt wurde in Platten geschnitten. Geprüft wurde das Brandverhalten der Proben mit Dicken von 10 mm nach einer Ablagerungszeit von 30 Tagen nach DIN 4102.

Die Ergebnisse der Beispiele sind in der Tabelle 3 zusammengefasst.

**Tabelle 3:**

| **Bsp.** | **Flammschutzmittel (Gew. Teil)** | **Zusatz Synergist (Gew. Teile)** | **Brandtest (B2 nach DIN 4102) / Verlöschzeit (s)** |
|---|---|---|---|
| *V5* | *HBCD (4, 0)* | | *bestanden* / *9,4* s |
| **B.23** | II.1 (2,5) | Schwefel (2,5) | bestanden / 7,1 s |
| **B.24** | II.2 (2,5) | Schwefel (2,5) | bestanden / 8,7 s |
| **B.25** | II.3 (2,5) | Schwefel (2,5) | bestanden / 9,1 s |
| **B.26** | II.4 (2,5) | Schwefel (2,5) | bestanden / 11,7 s |
| **B.27** | III.2 (5,0) | Schwefel (5,0) | bestanden / 10,9 s |
| **B.28** | IV.1 (5,0) | Schwefel (2,5) | bestanden / 7,3 s |
| **B.29** | IV.3 (2,5) | Schwefel (2,5) | bestanden / 8,0 s |
| **B.30** | IV.4 (2,5) | Schwefel (2,5) | bestanden / 9,5 s |

Die Anwendungsbeispiele belegen, dass mit den erfindungsgemäßen Flammschutzmitteln ein Schaumstoff hergestellt werden kann, der ohne den Einsatz halogenierter Flammschutzmittel ein gleiches oder besseres Brandverhalten als mit diesen Mitteln zeigt.

## Patentansprüche

1. Verwendung einer Phosphorverbindung der Formel (I) als Flammschutzmittel, 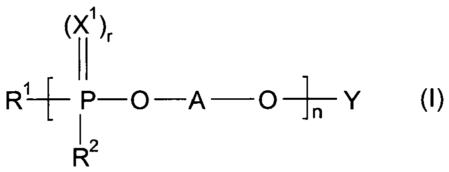 wobei die Symbole in der Formel (I) folgende Bedeutungen haben:
A ist eine Gruppe 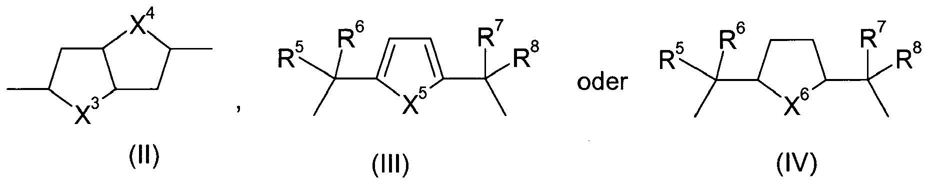
Y ist -P(=X²)ₛR³R⁴, H, eine geradkettige oder verzweigte C₁-C₁₂-Alkylgruppe, C₅-C₆-Cycloalkyl, C₆-C₁₂-Aryl, Benzyl, wobei die vier letztgenannten Gruppen unsubstituiert oder durch einen oder mehrere Reste C₁-C₄-Alkyl oder C₂-C₄-Alkenyl substituiert sind;
R¹, R², R³ und R⁴ sind gleich oder verschieden Wasserstoff, OH, C₁-C₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR⁹ COR¹⁰, COOR¹¹, CONR¹²R¹³ oder zwei Reste R¹, R², R³, R⁴ bilden zusammen mit dem Phosphoratom, an das sie gebunden sind, oder der Gruppe P-O-A-O-P ein Ringsystem;
R⁵, R⁶, R⁷, R⁸ sind gleich oder verschieden H, C₁-C₁₆-Alkyl, C₂-C₁₆-Alkenyl, C₁-C₁₆-Alkoxy, C₂-C₁₆-Alkenoxy;
R⁹, R¹⁰, R¹¹, R¹² , R¹³ sind gleich oder verschieden H C₁-C₁₆-Alkyl, C₂-C₁₆-Alkenyl, C₆-C₁₀-Aryl, C₆-C₁₀-Aryl-C₁-C₁₆-Alkyl , C₆-C₁₀-Aryl-C₁-C₁₆-Alkoxy;
X¹, X² sind gleich oder verschieden S oder O;
r, s sind gleich oder verschieden 0 oder 1;
X³, X⁴, X⁵, X⁶ sind gleich oder verschieden S oder O und
n ist eine natürliche Zahl von 1 bis 50.

2. Verwendung gemäß Anspruch 1, wobei die Symbole und Indizes in der Formel (I) folgende Bedeutungen haben:
A ist eine Gruppe der Formel (II), (III) oder (IV);
Y ist (X²)ᵣPR³R⁴ oder H;
R¹, R², R³, R⁴ sind gleich oder verschieden C₆-C₁₀-Aryloxy, C₁-C₁₀-Aryl-C₁-C₁₆-Alkyl oder C₆-C₁₀-Aryl-C₁-C₁₆-Alkoxy;
R⁵, R⁶, R⁷, R⁸ sind gleich oder verschieden H, C₁-C₁₆-Alkyl, C₂-C₁₆-Alkenyl, C₁-C₁₆-Alkoxy, C₂-C₁₆-Alkenoxy;
X¹, X² sind gleich oder verschieden S oder O;
r, s sind gleich 0 oder 1;
X³, X⁴, X⁵, X⁶ sind O und
n ist eine natürliche Zahl von 1 bis 30.

3. Verwendung gemäß Anspruch 1 oder 2, wobei die Symbole und Indizes in der Formel (I) folgende Bedeutungen haben:
A ist eine Gruppe der Formel (II), (III) oder (IV);
Y ist (X²)ᵣPR³R⁴;
R¹, R², R³, R⁴ sind gleich oder verschieden Phenyl, Phenoxy, Phenyl-C₁-C₁₆-Alkyl, Phenyl-C₁-C₁₆-Alkoxy;
R⁵, R⁶, R⁷, R⁸ sind H;
X¹, X² sind gleich oder verschieden S oder O;
r, s sind gleich 0 oder 1;
X³, X⁴, X⁵, X⁶ sind O und
n ist 1.

4. Verwendung gemäß einem der Ansprüche 1 bis 3, wobei die Symbole und Indizes in der Formel (I) folgende Bedeutungen haben:
A ist eine Gruppe der Formel (II), (III) oder (IV);
Y ist (X²)ᵣPR³R⁴;
R¹, R², R³, R⁴ sind gleich Phenyl oder Phenoxy;
R⁵, R⁶, R⁷, R⁸ sind H;
X¹, X² sind gleich S oder O;
r, s sind gleich 0 oder 1;
X³, X⁴, X⁵, X⁶ sind Sauerstoff und
n ist 1.

5. Verwendung gemäß einem der Ansprüche 1 bis 4, wobei die Verbindung der Formel (I) gewählt ist aus:

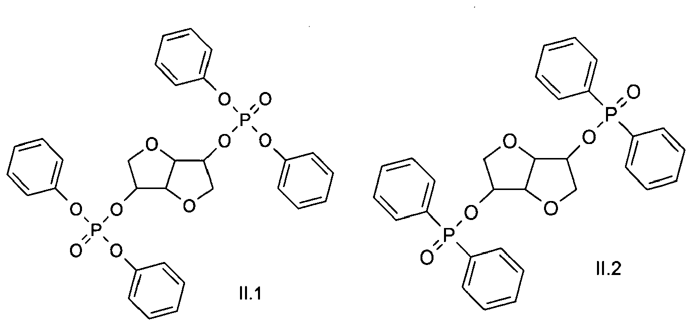

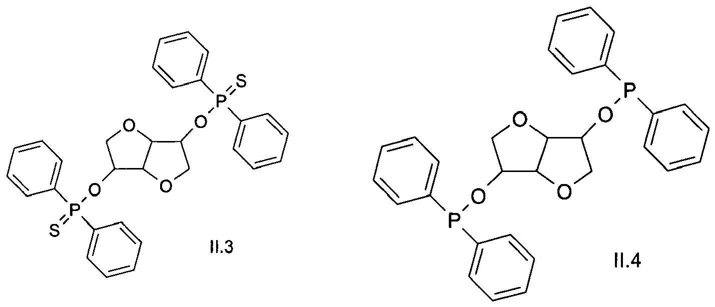

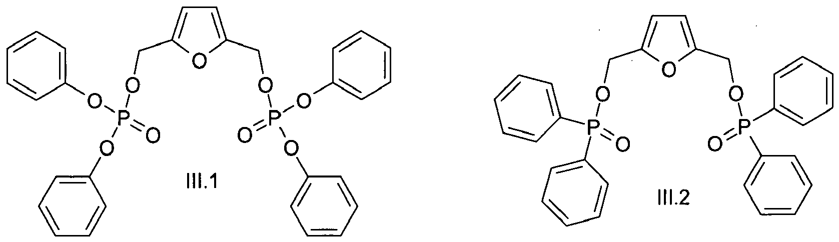

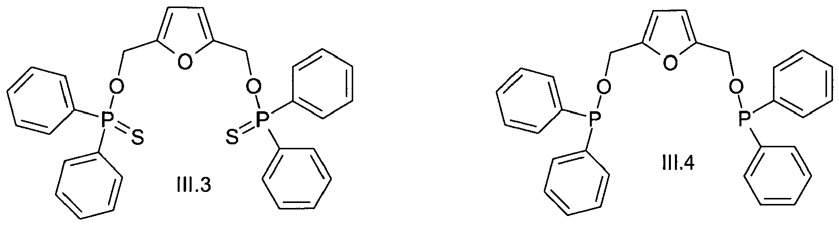

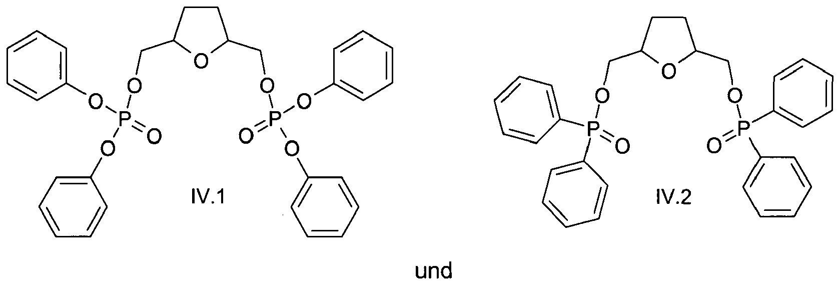

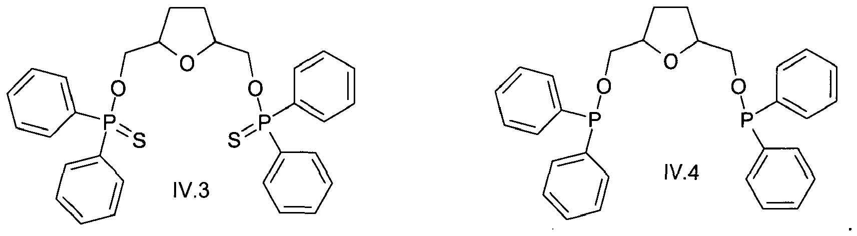

6. Verwendung gemäß einem der Ansprüche 1 bis 5, wobei 1 Verbindung der Formel (I) eingesetzt wird.

7. Verwendung gemäß einem der Ansprüche 1 bis 5, wobei mindestens zwei Verbindungen der Formel (I) eingesetzt werden.

8. Verwendung gemäß einem der Ansprüche 1 bis 7, wobei die Verbindung(en) der Formel (I) in Mischung mit einem oder mehreren weiteren flammhemmenden Verbindungen und/oder einem oder mehreren Synergisten eingesetzt wird.

9. Verwendung gemäß Anspruch 8, wobei ein Synergist aus der Gruppe bestehend aus organischen Peroxiden, organischen Polysulfiden, C-C-spaltenden Initiatoren und elementarem Schwefel eingesetzt wird.

10. Polymerzusammensetzung, enthaltend ein oder mehrere Polymere und ein Flammschutzmittel gemäß einem der Ansprüche 1 bis 9 in Form eines expandierbaren Styrolpolymers (EPS).

11. Polymerzusammensetzung, enthaltend ein oder mehrere Polymere und ein Flammschutzmittel gemäß einem der Ansprüche 1 bis 9 in Form eines Styrolpolymerextrusionsschaumstoffes (XPS).

12. Polymerzusammensetzung gemäß einem der Ansprüche 10 oder 11, **dadurch gekennzeichnet, dass** sie halogenfrei ist.

13. Polymerzusammensetzung gemäß einem der Ansprüche 10 bis 12, enthaltend 0,1 bis 25 Gew.-% (bezogen auf den Polymeranteil) an dem Fallschutzmittel.

14. Verfahren zur Herstellung eines expandierbaren Styrolpolymers (EPS) gemäß Anspruch 10, umfassend die Schritte:
a) Einmischen eines organischen Treibmittels und einer oder mehrerer Verbindungen der Formel (I) gemäß einen der Ansprüche 1 bis 5 sowie gegebenenfalls weiterer Hilfs-und Zusatzstoffen in eine Styrolpolymerschmelze mittels statischer und/oder dynamischer Mischer bei einer Temperatur von mindestens 150°C,
b) Kühlen der treibmittelhaltigen Styrolpolymerschmelze auf eine Temperatur von mindestens 120°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

15. Verfahren zur Herstellung eines expandierbaren Styrolpolymers gemäß Anspruch 10, umfassend die Schritte:
a) Polymerisation einer oder mehrerer Styrolmonomere in Suspension;
b) Zugabe einer oder mehrerer Verbindungen der Formel (I) gemäß einem der Ansprüche 1 bis 5 sowie gegebenenfalls weiterer Hilfs- und Zusatzstoffe vor, während und/oder nach der Polymerisation
c) Zugabe eines organischen Treibmittels vor, während und/oder nach der Polymerisation und
d) Abtrennen der expandierbaren, eine oder mehrere Verbindungen der Formel (I) enthaltenden Styrolpolymerteilchen von der Suspension.

16. Verfahren zur Herstellung eines Styrolextrusionsschaumstoffes (XPS) gemäß Anspruch 11, umfassend die Schritte:
a) Erhitzen einer Polymerkomponente P, die mindestens ein Styrolpolymer enthält, zur Ausbildung einer Polymerschmelze,
b) Einbringen einer Treibmittelkomponente T in die Polymerschmelze zur Ausbildung einer schäumbaren Schmelze,
c) Extrusion der schäumbaren Schmelze in einen Bereich niedrigeren Drucks unter Aufschäumen zu einem Extrusionsschaum und
d) Zugabe von mindestens einer Verbindung der Formel (I) gemäß einem der Ansprüche 1 bis 5 als Flammschutzmittel sowie gegebenenfalls weiterer Hilfs- und Zusatzstoffen in mindestens einem der Schritte a) und b).

17. und/oder einer halogenfreien Polymerzusammensetzung gemäß Anspruch 10 in expandierter Form als Dämm- und/oder Isoliermaterial.

18. Phosphorverbindung der Formel (I) gemäß einem der Ansprüche 1 bis 5, wobei in den Bedeutungen der Symbole in der Formel (I) X4 für S steht und wobei die folgenden Verbindungen ausgenommen sind:
a. 2,5-Anhydro-3,4-dideoxy-hexitol- bis(dihydrogen phosphat)
aa. Hexitol-2,3,4,5-tetradeoxy-2,5-epithio-bis[bis(2,4,6-trimethylphenyl)phosphonit]
bb. Hexitol-2,3,4,5-tetradeoxy-2,5-epithio-bis(dicyclohexylphosphinit) und
cc. Hexitol-2,3,4,5-tetradeoxy-2,5-epithio-bis(diethylphosphinit),

## Claims

1. The use of a phosphorus compound of the formula (I) as flame retardant, 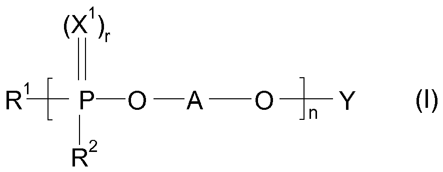 where the definitions of the symbols in the formula (I) are as follows:
A is one of the following groups: 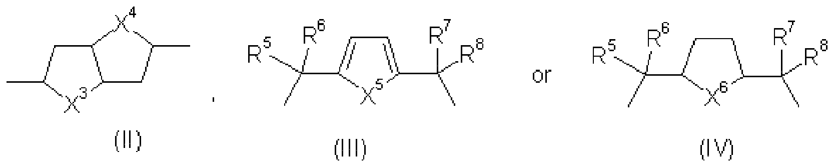
Y is -P (=X²) _{S}R³R⁴, H, a straight-chain or branched C₁-C₁₂-alkyl group, C₅-C₆-cycloalkyl, C₆-C₁₂-aryl, or benzyl, where the four last-mentioned groups are unsubstituted or have substitution by one or more radicals C₁-C₄-alkyl or C₂-C₄-alkenyl;
R¹, R², R³, and R⁴ are identical or different and are hydrogen, OH, C₁-C₁₆-alkyl, C₂-C₁₆-alkenyl, C₁-C₁₆alkoxy, C₂-C₁₆-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR⁹ COR¹⁰, COOR¹¹, CONR¹²R¹³ or two radicals R¹, R², R³, or R⁴ form, together with the phosphorus atom to which they are bonded, or the P-O-A-O-P group, a ring system;
R⁵, R⁶, R⁷, and R⁸ are identical or different and are H, C₁-C₁₆-alkyl, C₂-C₁₆-alkenyl, C₁-C₁₆-alkoxy, C₂-C₁₆-alkenoxy;
R⁹, R¹⁰, R¹¹, R¹², R¹³ are identical or different and are H, C₁-C₁₆-alkyl, C₂-C₁₆-alkenyl, C₆C₁₀-aryl, C₆-C₁₀-aryl-C₁-C₁₆-alkyl, C₆-C₁₀-aryl-C₁-C₁₆-alkoxy;
X¹ and X² are identical or different and are S or O;
r and s are identical or different and are 0 or 1;
X³, X⁴, X⁵, and X⁶ are identical or different and are S or O, and
n is a natural number from 1 to 50.

2. The use according to claim 1, where the definitions of the symbols and indices in the formula (I) are as follows:
A is a group of the formula (II), (III), or (IV);
Y is (X²) ᵣPR³R⁴, or H;
R¹, R², R³, and R⁴ are identical or different and are C₆-C₁₀-aryloxy, C₁-C₁₀-aryl-C₁-C₁₆-alkyl or C₆-C₁₀-aryl-C₁-C₁₀-alkoxy;
R⁵, R⁶, R⁷, and R⁸ are identical or different and are H, C₁-C₁₆-alkyl, C₂-C₁₆-alkenyl, C₁-C₁₆-alkoxy, C₂-C₁₆-alkenoxy;
X¹ and X² are identical or different and are S or O;
r and s are identically 0 or 1;
X³, X⁴, X⁵, and X⁶ are O, and
n is a natural number from 1 to 30.

3. The use according to claim 1 or 2, where the symbols and indices in the formula (I) are defined as follows:
A is a group of the formula (II), (III), or (IV);
Y is (X²) ᵣPR³R⁴;
R¹, R², R³, and R⁴ are identical or different and are phenyl, phenoxy, phenyl-C₁-C₁₆-alkyl, or phenyl-C₁-C₁₆-alkoxy ;
R⁵, R⁶, R⁷, and R⁸ are H;
X¹ and X² are identical or different and are S or O;
r and s are identically 0 or 1;
X³, X⁴, X⁵, and X⁶ are O, and
n is 1.

4. The use according to any of claims 1 to 3, where the symbols and indices in the formula (I) are defined as follows:
A is a group of the formula (II), (III), or (IV);
Y is (X²)ᵣPR³R⁴;
R¹, R², R³, and R⁴ are identically phenyl or phenoxy;
R⁵, R⁶, R⁷, and R⁸ are H;
X¹ and X² are identically S or O;
r and s are identically 0 or 1;
X³, X⁴, X⁵, and X⁶ are oxygen, and
n is 1.

5. The use according to any of claims 1 to 4, where the compound of the formula (I) has been selected from: 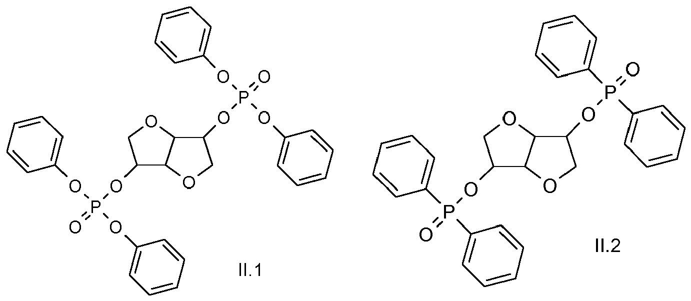 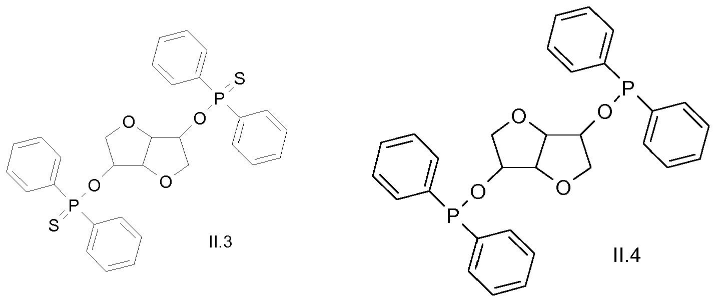 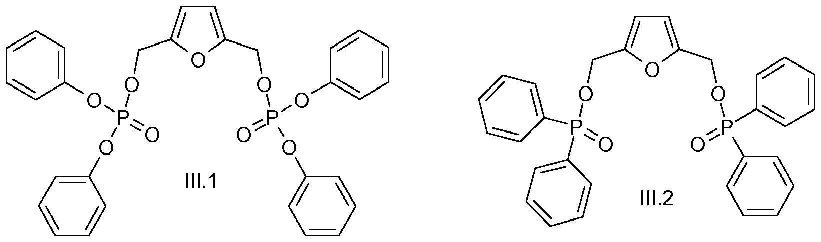 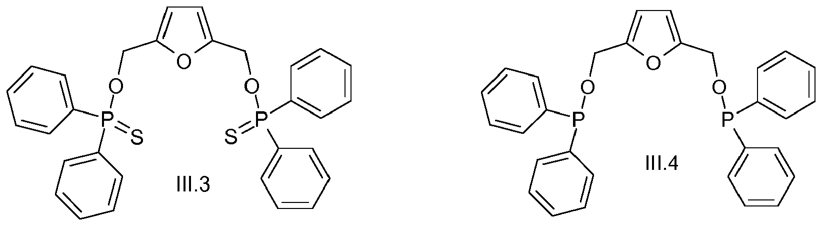 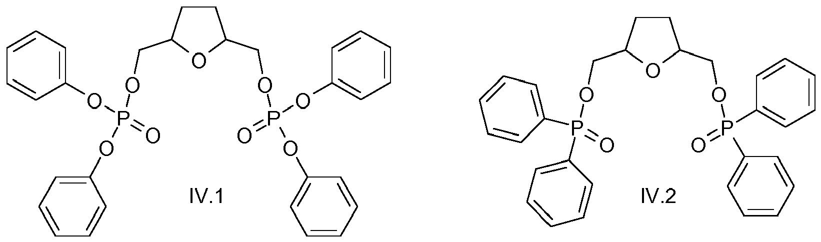 and

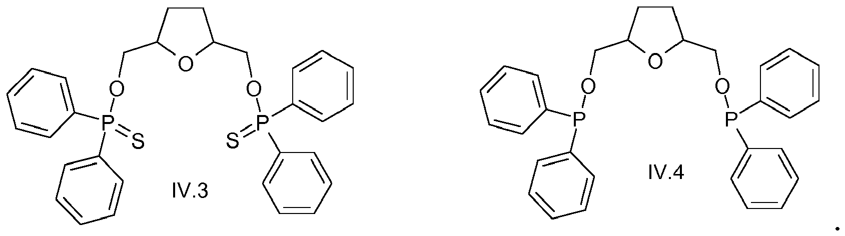

6. The use according to any of claims 1 to 5, where one compound of the formula (I) is used.

7. The use according to any of claims 1 to 5, where at least two compounds of the formula (I) are used.

8. The use according to any of claims 1 to 7, where the compound(s) of the formula (I) is/are used in a mixture with one or more other flame-retardant compounds and/or with one or more synergists.

9. The use according to claim 8, where a synergist is used from the group consisting of organic peroxides, organic polysulfides, C-C-cleaving initiators, and elemental sulfur.

10. A polymer composition, comprising one or more polymers and a flame retardant according to any of claims 1 to 9 in the form of an expandable styrene polymer (EPS).

11. A polymer composition, comprising one or more polymers and a flame retardant according to any of claims 1 to 9 in the form of an extruded styrene polymer foam (XPS).

12. The polymer composition according to either of claims 10 and 11, which is halogen-free.

13. The polymer composition according to any of claims 10 to 12, comprising from 0.1 to 25% by weight (based on polymer content) of the fall protection agent.

14. A process for the production of an expandable styrene polymer (EPS) according to claim 10, comprising the following steps:
a) mixing to incorporate an organic blowing agent and one or more compounds of the formula (I) according to any of claims 1 to 5 and optionally further auxiliaries and additives into a styrene polymer melt by means of static and/or dynamic mixers at a temperature of at least 150°C,
b) cooling of the styrene polymer melt comprising blowing agent to a temperature of at least 120°C,
c) discharge through a die plate with holes, the diameter of which at the exit from the die is at most 1.5 mm, and
d) pelletization of the melt comprising blowing agent directly behind the die plate under water at a pressure in the range from 1 to 20 bar.

15. A process for the production of an expandable styrene polymer according to claim 10, comprising the following steps:
a) polymerization of one or more styrene monomers in suspension;
b) addition of one or more compounds of the formula (I) according to any of claims 1 to 5 and optionally further auxiliaries and additives before, during and/or after the polymerization
c) addition of an organic blowing agent before, during and/or after the polymerization and
d) separation of the expandable styrene polymer particles, comprising one or more compounds of the formula (I), from the suspension.

16. A process for the production of an extruded styrene foam (XPS) according to claim 11, comprising the following steps:
a) heating a polymer component P which comprises at least one styrene polymer, to form a polymer melt,
b) incorporation of a blowing agent component T into the polymer melt to form a foamable melt,
c) extrusion of the foamable melt in a relatively low-pressure range with foaming, to give an extrusion foam, and
d) addition of at least one compound of the formula (I) according to any of claims 1 to 5 as flame retardant and optionally of further auxiliaries and additives in at least one of steps a) and b).
and/or of a halogen-free polymer composition according to claim 10 in expanded form as insulating material.

17. The use of a halogen-free polymer composition according to claim 11 and/or of a halogen-free polymer composition according to claim 10 in expanded form as insulating material.

18. A phosphorus compound of the formula (I) according to any of claims 1 to 5, where in the definitions of the symbols in the formula (I) X4 is S, and with the exception of the following compounds:
a. 2,5-anhydro-3,4-dideoxyhexitol bis(dihydrogenphosphate)
aa. hexitol-2,3,4,5-tetradeoxy-2,5-epithio bis[bis(2,4,6-trimethylphenyl)phosphonite]
bb. hexitol-2,3,4,5-tetradeoxy-2,5-epithio bis(dicyclohexylphosphinite), and
cc. hexitol-2,3,4,5-tetradeoxy-2,5-epithio bis(diethylphosphinite).

## Revendications

1. Utilisation d'un composé phosphoré de formule (I) en tant que retardateur de flamme, 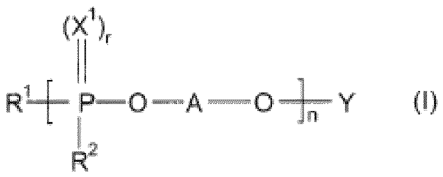 les symboles dans la formule (I) ayant les significations suivantes :
A est un groupe 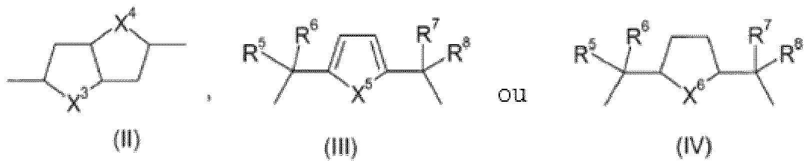
Y est -P (=X²) SR³R⁴, H, un groupe alkyle en C₁-C₁₂ à chaîne droite ou ramifié, cycloalkyle en C₅-C₆, aryle en C₆-C₁₂, benzyle, les quatre substituants nommés en dernier étant non substitués ou substitués par un ou plusieurs radicaux alkyle en C₁-C₄ ou alcényle en C₂-C₄ ;
R¹, R², R et R⁴, identiques ou différents, représentent un atome d'hydrogène, un groupe OH, alkyle en C₁-C₁₆, alcényle en C₂-C₁₆, alcoxy en C₁-C₁₆, alcénoxy en C₂-C₁₆, cycloalkyle en C₃-C₁₀, cycloalcoxy en C₃-C₁₀, aryle en C₆-C₁₀, aryloxy en C₆-C₁₀, aryl (C₅-C₁₀) -alkyle (C₁-C₁₆), aryl (C₆-C₁₀)-alcoxy (C₁-C₁₆), SR⁹, COR¹⁰, COOR¹¹, CONR¹²R¹³ ou deux radicaux R¹, R², R³, R⁴ forment ensemble avec l'atome de phosphore, auquel ils sont liés, ou avec le groupe P-O-A-O-P un système cyclique ;
R⁵, R⁶, R⁷, R⁸, identiques ou différents, représentent H, un groupe alkyle en C₁-C₁₆, alcényle en C₂-C₁₆, alcoxy en C₁-C₁₆, alcénoxy en C₂-C₁₆ ;
R⁹, R¹⁰, R¹¹, R¹², R¹³, identiques ou différents, représentent H, un groupe alkyle en C₁-C₁₆, alcényle en C₂-C₁₆, aryle en C₆-C₁₀, aryl (C₆-C₁₀)-alkyle (C₁-C₁₆), aryl (C₆-C₁₀) alcoxy (C₁-C₁₆) ;
X¹, X², identiques ou différents, représentent S ou O ;
r, s, identiques ou différents, représentent 0 ou 1 ;
X³, X⁴, X⁵, X⁶, identiques ou différents, représentent S ou O, et
n est un nombre naturel valant 1 à 50.

2. Utilisation selon la revendication 1, dans laquelle les symboles et indices dans la formule (I) ont les significations suivantes :
A est un groupe de formule (II), (III) ou (IV) ;
Y est (=X²)ᵣPR³R⁴ ou H ;
R¹, R², R³, R⁴, identiques ou différents, représentent un groupe aryloxy en C₆-C₁₀, aryl (C₁-C₁₀) -alkyle (C₁-C₁₆) ou aryl (C₆-C₁₀)-alcoxy (C₁-C₁₆) ;
R⁵, R⁶, R⁷, R⁸, identiques ou différents, représentent H, un groupe alkyle en C₁-C₁₆, alcényle en C₂-C₁₆, alcoxy en C₁-C₁₆, alcénoxy en C₂-C₁₆ ;
X¹, X², identiques ou différents, représentent S ou 0 :
r, s, identiques, représentent 0 ou 1 ;
X³, X⁴, X⁵, X⁶ représentent O et
n est un nombre naturel de 1 à 30.

3. Utilisation selon la revendication 1 ou 2, dans laquelle les symboles et indices dans la formule (I) ont les significations suivantes :
A est un groupe de formule (II), (III) ou (IV) ;
Y est (=X²)ᵣPR³R⁴ ;
R¹, R², R³, R⁴, identiques ou différents, représentent un groupe phényle, phénoxy, phényl-alkyle(C₁-C₁₆), phényl-alcoxy(C₁-C₁₆) ;
R⁵, R⁶, R⁷, R⁸ représentent H ;
X¹, X², identiques ou différents, représentent S ou O :
r, s, identiques, représentent 0 ou 1 ;
X³, X⁴, X⁵, X⁶ représentent O et
n est 1.

4. Utilisation selon l'une quelconque des revendications 1 à 3, dans laquelle les symboles et indices dans la formule (I) ont les significations suivantes :
A est un groupe de formule (II), (III) ou (IV) ;
Y est (=X²) ᵣPR³R⁴ ;
R¹, R², R³, R⁴, identiques, représentent le groupe phényle ou phénoxy ;
R⁵, R⁶, R⁷, R⁸ représentent H ;
X¹, X², identiques, représentent S ou O :
r, s, identiques, représentent 0 ou 1 ;
X³, X⁴, X⁵, X⁶ représentent un atome d'oxygène et
n est 1.

5. Utilisation selon l'une quelconque des revendications 1 à 4, dans laquelle le composé de formule (I) est choisi parmi :

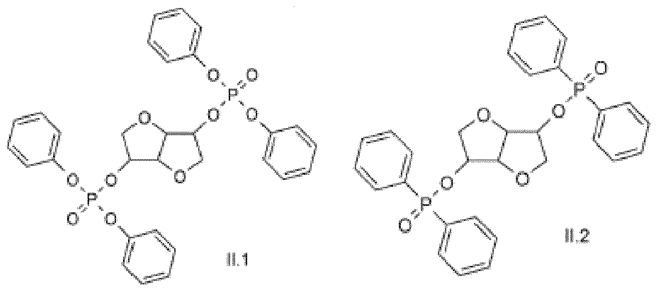

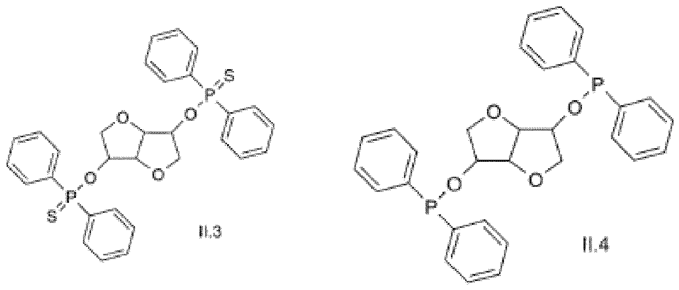

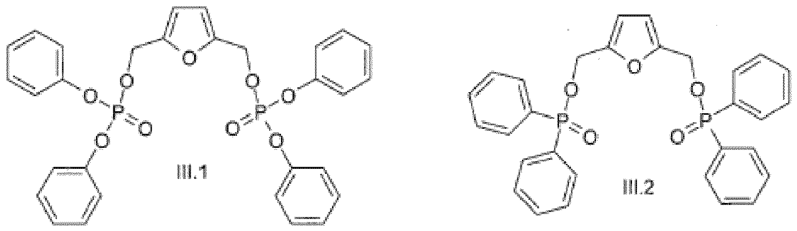

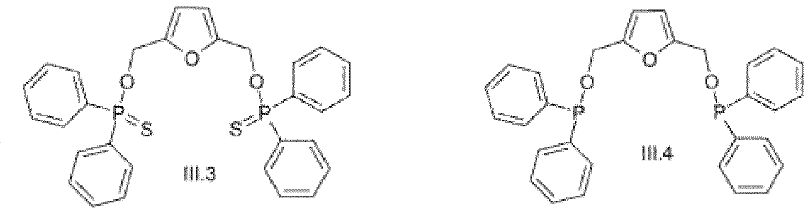

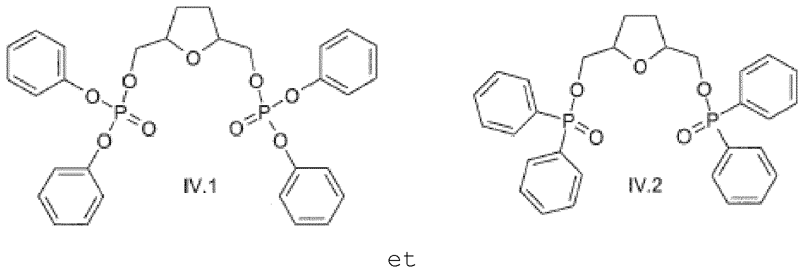

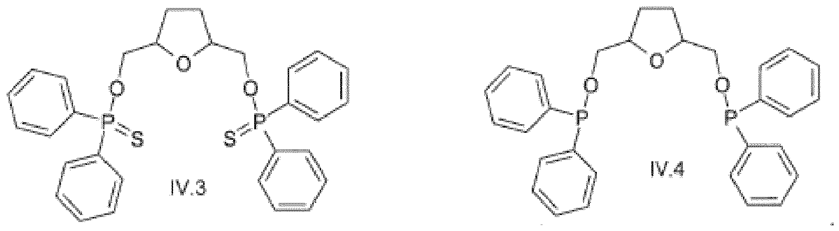

6. Utilisation selon l'une quelconque des revendications 1 à 5, dans laquelle on utilise 1 composé de formule (I).

7. Utilisation selon l'une quelconque des revendications 1 à 5, dans laquelle on utilise au moins deux composés de formule (I).

8. Utilisation selon l'une quelconque des revendications 1 à 7, dans laquelle on utilise le (s) composé(s) de formule (I) en mélange avec un ou plusieurs autres composés ignifuges et/ou un ou plusieurs agents synergiques.

9. Utilisation selon la revendication 8, dans laquelle on utilise un agent synergique choisi dans le groupe constitué par des peroxydes organiques, des polysulfures organiques, des amorceurs coupant C-C et le soufre élémentaire.

10. Composition de polymère, contenant un ou plusieurs polymères et un retardateur de flamme selon l'une quelconque des revendications 1 à 9 sous forme d'un polymère de styrène expansible (EPS).

11. Composition de polymère, contenant un ou plusieurs polymères et un retardateur de flamme selon l'une quelconque des revendications 1 à 9 sous forme d'une mousse de polymère de styrène extrudée (XPS).

12. Composition de polymère selon l'une quelconque des revendications 10 et 11, **caractérisée en ce qu'**elle est sans halogène.

13. Composition de polymère selon l'une quelconque des revendications 10 à 12, contenant 0,1 à 25 % en poids (par rapport à la fraction polymère) de l'équipement antichute.

14. Procédé pour la préparation d'un polymère de styrène expansible (EPS) selon la revendication 10, comprenant les étapes :
a) incorporation d'un agent porogène organique et d'un ou de plusieurs composés de formule (I) selon l'une quelconque des revendications 1 à 5 ainsi qu'éventuellement d'autres adjuvants et additifs dans une masse fondue de polymère de styrène au moyen de mélangeurs statiques et/ou dynamiques à une température d'au moins 150 °C,
b) refroidissement de la masse fondue de polymère de styrène contenant un agent porogène, jusqu'à une température d'au moins 120 °C,
c) décharge par une plaque de filière munie d'orifices, dont le diamètre à la sortie de la filière est au maximum de 1,5 mm et
d) granulation de la masse fondue contenant un agent porogène directement après la plaque de filière, sous eau, sous une pression dans la plage de 1 à 20 bars.

15. Procédé pour la préparation d'un polymère de styrène expansible selon la revendication 10, comprenant les étapes :
a) polymérisation d'un ou de plusieurs monomères de styrène en suspension ;
b) addition d'un ou de plusieurs composés de formule (I) selon l'une quelconque des revendications 1 à 5 ainsi qu'éventuellement d'autres adjuvants et additifs avant, pendant et/ou après la polymérisation
c) addition d'un agent porogène organique avant, pendant et/ou après la polymérisation et
d) séparation des particules de polymère de styrène expansibles, contenant un ou plusieurs composés de formule (I), d'avec la suspension.

16. Procédé pour la production d'une mousse de polystyrène extrudée (XPS) selon la revendication 11, comprenant les étapes :
a) chauffage d'un composant polymère P qui contient au moins un polymère de styrène, pour la formation d'une masse fondue de polymère,
b) introduction d'un composant porogène T dans la masse fondue de polymère pour la formation d'une masse fondue transformable en mousse,
c) extrusion de la masse fondue transformable en mousse dans une zone de plus basse pression avec moussage en une mousse extrudée, et
d) addition d'au moins un composé de formule (I) selon l'une quelconque des revendications 1 à 5 en tant que retardateur de flamme ainsi qu'éventuellement d'autres adjuvants et additifs dans au moins l'une des étapes a) et b).
et/ou d'une composition de polymère sans halogène selon la revendication 10, sous forme expansée, en tant que matériau isolant ou d'isolation.

17. Utilisation d'une composition de polymère sans halogène selon la revendication 11 et/ou d'une composition de polymère sans halogène selon la revendication 10, sous forme expanse, en tant que matériau isolant ou d'isolation.

18. Composé phosphoré de formule (I) selon l'une quelconque des revendications 1 à 5, dans les significations des symboles dans la formule (I) X4 représentant S et les composés suivants étant exclus :
a. bis(dihydrogénophosphate) de 2,5-anhydro-3,4-didésoxy-hexitol
aa. 2,3,4,5-tétradésoxy-2,5-épithio-bis[bis(2,4,6-triméthylphényl)phosphonite] d'hexitol
bb. 2,3,4,5-tétradésoxy-2,5-épithio-bis(dicyclohexyl-phosphinite) d'hexitol et
cc. 2,3,4,5-tétradésoxy-2,5-épithio-bis(diéthyl-phosphinite) d'hexitol.
